# EUROPEAN PATENT APPLICATION

(11) **EP 4 513 924 A1**
(43) Date of publication of application: **26.02.2025**
(21) Application number: 23799149.2
(22) Date of filing: 04.04.2023
(51) Int. Cl.: H04W 12/041

(54) **COMMUNICATION METHOD AND APPARATUS**

(30) Priority: 06.05.2022 CN 202210488548
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Goddar, Heinz J.
(86) International application number: PCT/CN2023/086101
(87) International publication number: WO 2023/213162

(57) **Abstract**

This application provides a communication method and apparatus. The method may include: A terminal device obtains first indication information, where the first indication information indicates at least one multicast key transmission procedure, each multicast key transmission procedure is a communication procedure that is supported by a network side and that is used to transmit a multicast key to the terminal device, and the multicast key is a security transmission key of a multicast session between the terminal device and a first content delivery network element. The terminal device obtains service data from a core network based on a support case of the terminal device for the at least one multicast key transmission procedure. According to the solutions of this application, a possibility of obtaining the service data by the terminal device can be improved.

## Description

### CROSS-REFERENCE TO RELATED APPLICATIONS

This application claims priority to Chinese Patent Application 202210488548.X, filed with the China National Intellectual Property Administration on May 6, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To ensure security of multicast communication, a network side usually distributes a multicast key to a terminal device before multicast communication, to perform security protection on service data. Currently, the network side may send a multicast key to a user equipment (user equipment, UE) by using a plurality of different multicast key transmission procedures, for example, a signaling-plane communication procedure between a session management function (session management function, SMF) network element and the UE, an authentication and key management for applications (authentication and key management for applications, AKMA)-based user-plane communication procedure between a multicast/broadcast service transport function (multicast/broadcast service transport function, MBSTF) and the UE, and a generic bootstrapping architecture (generic bootstrapping architecture, GBA)-based user-plane communication procedure between the MBSTF and the UE. However, according to a 3rd generation partnership project (3rd Generation Partnership Project, 3GPP) standard specification, these procedures are not necessarily supported by the network side and the UE. How to reduce a possibility that the UE cannot obtain service data when a plurality of optional procedures coexist is a problem that needs to be considered currently.

### SUMMARY

This application provides a communication method and apparatus, to improve a possibility that a terminal device obtains service data.

According to a first aspect, a communication method is provided. The method may be performed by a terminal device, or may be performed by a component (for example, a chip or a circuit) of the terminal device. This is not limited. For ease of description, the following uses an example in which the method is performed by the terminal device for description.

The communication method includes: The terminal device obtains first indication information, where the first indication information indicates at least one multicast key transmission procedure, each multicast key transmission procedure is a communication procedure that is supported by a network side and that is used to transmit a multicast key to the terminal device, and the multicast key is a security transmission key of a multicast session between the terminal device and a first content delivery network element. The terminal device obtains service data from a core network based on a support case of the terminal device for the at least one multicast key transmission procedure.

Based on the foregoing solution, in one aspect, the terminal device may obtain the service data from the core network based on the support case of the terminal device for the at least one multicast key transmission procedure supported by the network side. A session path for obtaining the service data from the core network is determined based on the support case. This avoids a case in which the terminal device cannot obtain the service data (or cannot perform security deprotection on security-protected service data with the multicast key) because the terminal device cannot obtain the multicast key distributed by the network side, and can improve user experience. In another aspect, in the solution provided in this embodiment of this application, the terminal device autonomously determines the support case of the terminal device for the at least one multicast key transmission procedure supported by the network side, so that the network side does not need to determine or decide a specific multicast key transmission procedure to be used to distribute the multicast key to the terminal device, to reduce overheads of the network side.

With reference to the first aspect, in some implementations of the first aspect, that the terminal device obtains service data from a core network based on a support case of the terminal device for the at least one multicast key transmission procedure includes: The terminal device determines that the terminal device supports a target multicast key transmission procedure in the at least one multicast key transmission procedure; the terminal device obtains the multicast key by using the target multicast key transmission procedure; and the terminal device obtains the service data from the first content delivery network element based on the multicast key.

In the foregoing solution, when the terminal device supports the target multicast key transmission procedure in the at least one multicast key transmission procedure supported by the network side, the terminal device may obtain the multicast key by using the target multicast key transmission procedure, so that the terminal device can obtain the service data by using the multicast key. In addition, a terminal side performs determining, which may further reduce overheads of the network side.

With reference to the first aspect, in some implementations of the first aspect, that the terminal device obtains the service data from the first content delivery network element based on the multicast key includes: The terminal device performs, by using the multicast key, security deprotection on security-protected data received from the first content delivery network element through the multicast session, to obtain the service data.

It may be understood that the first content delivery network element herein may be a multicast user plane function network element. In other words, after obtaining the multicast key, the terminal device may obtain the service data based on the multicast key through the multicast session.

With reference to the first aspect, in some implementations of the first aspect, the target multicast key transmission procedure is a signaling-plane communication procedure between a session management network element and the terminal device. That the terminal device obtains the multicast key by using the target multicast key transmission procedure includes: The terminal device obtains the multicast key from a multicast session join response message that is from the session management network element. Alternatively, the target multicast key transmission procedure is an authentication and key management for applications-based user-plane communication procedure between a multicast service network element and the terminal device. That the terminal device obtains the multicast key by using the target multicast key transmission procedure includes: The terminal device obtains the multicast key from a multimedia internet key management message that is from the multicast service network element based on an application key generated by using an authentication and key management mechanism. Alternatively, the target multicast key transmission procedure is a generic bootstrapping architecture-based user-plane communication procedure between a multicast service network element and the terminal device. That the terminal device obtains the multicast key by using the target multicast key transmission procedure includes: The terminal device obtains the multicast key from a multimedia internet key management message that is from the multicast service network element based on an application key generated by using a generic bootstrapping architecture mechanism.

With reference to the first aspect, in some implementations of the first aspect, that the terminal device obtains service data from the network side based on a support case of the terminal device for the at least one multicast key transmission procedure includes: The terminal device determines that the terminal device does not support all of the at least one multicast key transmission procedure; and the terminal device receives the service data from a second content delivery network element through a unicast session.

In the foregoing solution, when determining that all of the at least one multicast key transmission procedure is not supported, the terminal device determines to obtain the service data through the unicast session. This avoids a case in which the terminal device cannot obtain the service data (or cannot perform security deprotection on the security-protected service data with the multicast key) because the terminal device cannot obtain the multicast key distributed by the network side, and can improve user experience.

With reference to the first aspect, in some implementations of the first aspect, the second content delivery network element is a user plane function network element.

With reference to the first aspect, in some implementations of the first aspect, the terminal device has joined the multicast session, and the method further includes: The terminal device requests to leave the multicast session from the session management network element.

In the foregoing solution, when determining that all of the at least one multicast key transmission procedure is not supported, the terminal device leaves the joined multicast session. This can avoid a case in which the terminal device cannot obtain the service data (or cannot perform security deprotection on the security-protected service data with the multicast key) because the terminal device cannot obtain the multicast key distributed by the network side, and improve user experience.

With reference to the first aspect, in some implementations of the first aspect, that the terminal device obtains service data from the network side based on a support case of the terminal device for the at least one multicast key transmission procedure includes: The terminal device selects, based on the support case of the terminal device for the at least one multicast key transmission procedure, a session used to obtain the service data from the core network.

With reference to the first aspect, in some implementations of the first aspect, the first content delivery network element is a multicast user plane function network element, and that the terminal device selects, based on the support case of the terminal device for the at least one multicast key transmission procedure, a session used to obtain the service data from the core network includes: The terminal device determines that the terminal device supports the target multicast key transmission procedure in the at least one multicast key transmission procedure; and the terminal device selects the multicast session between the terminal device and the first content delivery network element as the session used to obtain the service data.

With reference to the first aspect, in some implementations of the first aspect, that the terminal device selects, based on the support case of the terminal device for the at least one multicast key transmission procedure, a session used to obtain the service data from the core network includes: The terminal device determines that the terminal device does not support all of the at least one multicast key transmission procedure; and the terminal device selects the unicast session between the terminal device and the second content delivery network element as the session used to obtain the service data.

With reference to the first aspect, in some implementations of the first aspect, that a terminal device obtains indication information includes: The terminal device obtains the indication information from a first message that is from the multicast service function network element.

With reference to the first aspect, in some implementations of the first aspect, the first message is a service announcement message.

With reference to the first aspect, in some implementations of the first aspect, that a terminal device obtains indication information includes: The terminal device obtains the indication information from a second message that is from an access network device.

With reference to the first aspect, in some implementations of the first aspect, the second message is a system message.

With reference to the first aspect, in some implementations of the first aspect, that a terminal device obtains indication information includes: The terminal device obtains the indication information from a third message that is from an application function network element.

With reference to the first aspect, in some implementations of the first aspect, that a terminal device obtains indication information includes: The terminal device obtains the indication information from a fourth message that is from the session management network element.

With reference to the first aspect, in some implementations of the first aspect, the fourth message is a multicast session join response message.

With reference to the first aspect, in some implementations of the first aspect, the at least one multicast key transmission procedure includes one or more of the following: a signaling-plane communication procedure between the session management network element and the terminal device; an authentication and key management for applications-based user-plane communication procedure between the multicast service network element and the terminal device; and a generic bootstrapping architecture-based user-plane communication procedure between the multicast service network element and the terminal device.

With reference to the first aspect, in some implementations of the first aspect, the unicast session is a data connection session between the terminal and a user plane function network element, and the method further includes: The terminal device determines that establishment of the unicast session is completed; and the terminal device sends second indication information to the application function network element, where the second indication information indicates that the unicast session is successfully established.

With reference to the first aspect, in some implementations of the first aspect, the method further includes: The terminal device determines that establishment of the multicast session is completed; and the terminal device sends third indication information to the application function network element, where the third indication information indicates that the multicast session is successfully established.

According to a second aspect, a communication method is provided. The method may be performed by a network device, or may be performed by a component (for example, a chip or a circuit) of the network device. This is not limited. For ease of description, the following uses an example in which the method is performed by the network device for description.

The communication method includes: The network device determines first indication information, where the first indication information indicates at least one multicast key transmission procedure, each multicast key transmission procedure is a communication procedure that is supported by a network side and that is used to transmit a multicast key to a terminal device, and the multicast key is a security transmission key of a multicast session between the terminal device and a first content delivery network element; and the network device sends the first indication information to the terminal device.

Based on the foregoing solution, the network device indicates, to the terminal device, the at least one multicast key transmission procedure supported by the network side, so that the terminal device can obtain the service data from the core network based on the support case of the terminal device for the one or more multicast key transmission procedures. This can avoid a case in which the terminal device cannot obtain the service data (or cannot perform security deprotection on security-protected service data with the multicast key) because the terminal device cannot obtain the multicast key distributed by the network side, and improve user experience. In another aspect, in the solution provided in this embodiment of this application, the network device sends the first indication information to the terminal device, and the terminal device autonomously determines the support case of the terminal device for the at least one multicast key transmission procedure supported by the network side, so that the network side does not need to determine or decide a specific multicast key transmission procedure to be used to distribute the multicast key to the terminal device, to reduce overheads of the network side.

With reference to the second aspect, in some implementations of the second aspect, the network device is a multicast service network element, and that the network device sends the first indication information to the terminal device includes: The multicast service network element sends a first message to the terminal device, where the first message includes the indication information.

With reference to the second aspect, in some implementations of the second aspect, the first message is a service announcement message.

With reference to the second aspect, in some implementations of the second aspect, the network device is an access network device, and that the network device sends the indication information to the terminal device includes: The access network device sends a second message to the terminal device, where the second message includes the indication information.

With reference to the second aspect, in some implementations of the second aspect, the second message is a system message.

With reference to the second aspect, in some implementations of the second aspect, the network device is an application function network element, and that the network device sends the indication information to the terminal device includes: The application function network element sends a third message to the terminal device, where the third message includes the indication information.

With reference to the second aspect, in some implementations of the second aspect, the network device is a session management network element, and that the network device sends the indication information to the terminal device includes: The session management network element sends a fourth message to the terminal device, where the fourth message includes the indication information.

With reference to the second aspect, in some implementations of the second aspect, the fourth message is a multicast session join response message.

With reference to the second aspect, in some implementations of the second aspect, the at least one multicast key transmission procedure includes one or more of the following: a signaling-plane communication procedure between the session management network element and the terminal device; an authentication and key management for applications-based user-plane communication procedure between the multicast service network element and the terminal device; and a generic bootstrapping architecture-based user-plane communication procedure between the multicast service network element and the terminal device.

According to a third aspect, a communication method is provided. The method may be performed by a session management network element, or may be performed by a component (for example, a chip or a circuit) of the session management network element. This is not limited. For ease of description, the following uses an example in which the method is performed by the session management network element for description.

The communication method includes: The session management network element receives a request message from a terminal device, where the request message is used to request to join a multicast session between the terminal device and a first content delivery network element; the session management network element determines that the terminal device does not support all of at least one multicast key transmission procedure supported by a network side; the session management network element sends third indication information to the terminal device, where the third indication information indicates that the session management network element rejects the terminal device to join the multicast session or indicates the terminal device to obtain service data through a unicast session.

Based on the foregoing method, when determining that the terminal device does not support all of the at least one multicast key transmission procedure, the session management network element may reject the terminal device to join the multicast session, so that the terminal device can subsequently receive the service data through the unicast session. This can avoid a case in which the terminal device cannot obtain the service data (or cannot perform security deprotection on security-protected service data with the multicast key) because the terminal device cannot obtain the multicast key distributed by the network side, and improve user experience.

With reference to the third aspect, in some implementations of the third aspect, the first content delivery network element is a multicast user plane function network element.

According to a fourth aspect, a communication method is provided. The method may be performed by a terminal device, or may be performed by a component (for example, a chip or a circuit) of the terminal device. This is not limited. For ease of description, the following uses an example in which the method is performed by the terminal device for description.

The communication method includes: The terminal device sends a request message to a session management network element, where the request message is used to request to join a multicast session between the terminal device and a first content delivery network element; the terminal device receives third indication information from the session management network element, where the third indication information indicates that the session management function rejects the terminal device to join the multicast session or indicates the terminal device to obtain service data through a unicast session; and the terminal device determines, based on the third indication information, that the terminal device fails to join the multicast session.

Based on the foregoing solution, the session management network element may reject the terminal device to join the multicast session. In this case, the terminal device determines that the terminal device fails to join the multicast session, and therefore does not receive the service data through the multicast session. This can reduce a case in which the service data fails to be obtained, and reduce a waste of resources.

With reference to the fourth aspect, in some implementations of the fourth aspect, the method further includes: The terminal device chooses, based on the third indication information, to obtain the service data through a unicast session between the terminal device and a second content delivery network element.

Based on the foregoing solution, when the session management network element rejects the terminal device to join the multicast session, the terminal device may determine to obtain the service data through the unicast session. This avoids a case in which the terminal device cannot obtain the service data (or cannot perform security deprotection on security-protected service data with the multicast key) because the terminal device cannot obtain the multicast key distributed by the network side, and can improve user experience.

With reference to the fourth aspect, in some implementations of the fourth aspect, the first content delivery network element is a multicast user plane function network element, and the second content delivery network element is a user plane function network element.

With reference to the fourth aspect, in some implementations of the fourth aspect, that the terminal device receives third indication information from the session management network element includes: The terminal device receives, from the session management network element, a response message corresponding to the request message, where the response message includes the third indication information.

With reference to the fourth aspect, in some implementations of the fourth aspect, the method further includes: The terminal device sends fourth indication information to an application function network element, where the fourth indication information indicates to send the service data to the terminal device through the unicast session.

According to a fifth aspect, a communication method is provided. The method may be performed by a terminal device, or may be performed by a component (for example, a chip or a circuit) of the terminal device. This is not limited. For ease of description, the following uses an example in which the method is performed by the terminal device for description.

The communication method includes: The terminal device determines that a multicast key fails to be obtained from a network side, where the multicast key is a security transmission key of a multicast session between the terminal device and a first content delivery network element; and the terminal device requests, from a session management network element, to leave a multicast session that the terminal device has joined.

Based on the foregoing method, in one aspect, after determining that the multicast key fails to be obtained, the terminal device leaves the joined multicast session. This can avoid a case in which the terminal device cannot obtain service data (or cannot perform security deprotection on security-protected service data with the multicast key) because the terminal device cannot obtain the multicast key distributed by the network side, and improves user experience. In another aspect, in the solution provided in this embodiment of this application, the network side does not need to determine or decide a specific multicast key transmission procedure to be used to distribute the multicast key to the terminal device, to reduce overheads of the network side. With reference to the fifth aspect, in some implementations of the fifth aspect, that the terminal device determines that a multicast key fails to be obtained from a network side includes: The terminal device determines that the multicast key fails to be obtained from the network side by using a first multicast key transmission procedure, where the first multicast key transmission procedure is a first communication procedure used by the network side to transmit the multicast key to the terminal device.

With reference to the fifth aspect, in some implementations of the fifth aspect, the first multicast key transmission procedure is a signaling-plane communication procedure between the session management network element and the terminal device, and that the terminal device determines that the multicast key fails to be obtained from the network side by using a first multicast key transmission procedure includes: The terminal device requests to join the multicast session from the session management network element. The terminal device receives a response message from the session management network element. The terminal device determines that the multicast key fails to be obtained from the response message.

With reference to the fifth aspect, in some implementations of the fifth aspect, that the terminal device determines that a multicast key fails to be obtained from a network side further includes: The terminal device determines that the multicast key fails to be obtained from the network side by using a second multicast key transmission procedure, where the second multicast key transmission procedure is a second communication procedure used by the network side to transmit the multicast key to the terminal device.

With reference to the fifth aspect, in some implementations of the fifth aspect, the second multicast key transmission procedure is a user-plane communication procedure between a multicast service network element and the terminal device, and that the terminal device determines that the multicast key fails to be obtained from the network side by using a second multicast key transmission procedure includes: The terminal device initiates a security capability exposure mechanism negotiation procedure to the network side; the terminal device determines that the security capability exposure mechanism negotiation fails; and the terminal device determines, based on a result that the security capability exposure mechanism negotiation fails, that the multicast key fails to be obtained from the network side.

With reference to the fifth aspect, in some implementations of the fifth aspect, the second multicast key transmission procedure is an authentication and key management for applications-based user-plane communication procedure between the multicast service network element and the terminal device, and that the terminal device determines that the multicast key fails to be obtained from the network side by using a second multicast key transmission procedure includes: The terminal device initiates a user service registration procedure to the multicast service network element based on an authentication and key management for applications mechanism; the terminal device determines that the user service registration procedure fails; and the terminal device determines, based on a result that the user service registration procedure fails, that the multicast key fails to be obtained from the network side.

With reference to the fifth aspect, in some implementations of the fifth aspect, that the terminal device determines that a multicast key fails to be obtained from a network side further includes: The terminal device determines that the multicast key fails to be obtained from the network side by using a third multicast key transmission procedure, where the third multicast key transmission procedure is a third communication procedure used by the network side to transmit the multicast key to the terminal device.

With reference to the fifth aspect, in some implementations of the fifth aspect, the third multicast key transmission procedure is a generic bootstrapping architecture-based user-plane communication procedure between the multicast service network element and the terminal device, and that the terminal device determines that the multicast key fails to be obtained from the network side by using a third multicast key transmission procedure includes: The terminal device initiates a user service registration procedure to the multicast service network element based on a generic bootstrapping architecture mechanism; the terminal device determines that the user service registration procedure fails; and the terminal device determines, based on a result that the user service registration procedure fails, that the multicast key fails to be obtained from the network side.

With reference to the fifth aspect, in some implementations of the fifth aspect, the method further includes: The terminal device chooses to receive the service data from a second content delivery network element through a unicast session.

With reference to the fifth aspect, in some implementations of the fifth aspect, the second content delivery network element is a user plane function network element.

With reference to the fifth aspect, in some implementations of the fifth aspect, the method further includes: The terminal device sends fourth indication information to an application function network element, where the fourth indication information indicates to send the service data to the terminal device through the unicast session.

With reference to the fifth aspect, in some implementations of the fifth aspect, the first content delivery network element is a multicast user plane function network element.

According to a sixth aspect, a communication apparatus is provided, and the apparatus is configured to perform any method provided in the first aspect to the fifth aspect. Specifically, the apparatus may include a unit and/or a module configured to perform the methods provided in the first aspect to the fifth aspect, for example, a processing module and/or a transceiver module (which may also be referred to as a communication module). In an implementation, the apparatus is a network device, or a chip, a chip system, or a circuit in the network device. For example, the apparatus is a mobility management network element, an application function network element, a multicast service transport function network element, or an access network device. When the apparatus is a network device, the communication module may be a transceiver or an input/output interface, and the processing module may be a processor.

In a possible case, the apparatus is a terminal device, or a chip, a chip system, or a circuit in the terminal device. In this case, the apparatus may include a unit and/or a module configured to perform the method provided in the first aspect or the fourth aspect, for example, a processing module and/or a transceiver module.

In a possible case, the apparatus is a network device or a chip, a chip system, or a circuit in the network device. In this case, the apparatus may include a unit and/or a module configured to perform the method provided in the second aspect, for example, a processing unit and/or a communication unit.

In another possible case, the apparatus is a session management network element, or a chip, a chip system, or a circuit in the session management network element. In this case, the apparatus may include a unit and/or a module configured to perform the method provided in the third aspect or the fifth aspect, for example, a processing module and/or a transceiver module.

Optionally, the transceiver may be a transceiver circuit. Optionally, the input/output interface may be an input/output circuit.

Optionally, the transceiver may be a transceiver circuit. Optionally, the input/output interface may be an input/output circuit.

According to a seventh aspect, a communication apparatus is provided. The apparatus includes: a memory, configured to store a program; and a processor, configured to execute the program stored in the memory. When the program stored in the memory is executed, the processor is configured to perform any method provided in the first aspect to the fifth aspect.

According to an eighth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the foregoing information is output by the processor, other processing may further need to be performed on the foregoing information before the foregoing information arrives at the transceiver. Similarly, when the processor receives the foregoing inputted information, the transceiver obtains/receives the foregoing information, and inputs the information into the processor. Further, after the transceiver receives the foregoing information, other processing may need to be performed on the foregoing information before the foregoing information is input into the processor.

Based on the foregoing principle, for example, receiving a request message mentioned in the foregoing methods may be understood as receiving inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a ninth aspect, a computer-readable storage medium is provided. The computer-readable medium stores program code to be executed by a device, and the program code is used to perform any method provided in the first aspect to the fifth aspect.

According to a tenth aspect, a computer program product including instructions is provided. When the computer program product runs on a computer, the computer is enabled to perform any method provided in the first aspect to the fifth aspect.

According to an eleventh aspect, a chip is provided. The chip includes a processor and a communication interface. The processor reads, through the communication interface, instructions stored in a memory, to perform any method provided in the first aspect to the fifth aspect.

Optionally, in an implementation, the chip may further include the memory. The memory stores the instructions, and the processor is configured to execute the instructions stored in the memory. When the instructions are executed, the processor is configured to perform any method provided in the first aspect to the fifth aspect.

According to a twelfth aspect, a communication system is provided. The communication system includes the terminal device according to the first aspect and the network device according to the second aspect.

According to a thirteenth aspect, a communication method is provided. The method includes: A network device determines first indication information, where the first indication information indicates at least one multicast key transmission procedure, each multicast key transmission procedure is a communication procedure that is supported by a network side and that is used to transmit a multicast key to a terminal device, and the multicast key is a security transmission key of a multicast session between the terminal device and a first content delivery network element; the network device sends the first indication information to the terminal device; the terminal device receives the first indication information from the network device; and the terminal device obtains service data from a core network based on a support case of the terminal device for the at least one multicast key transmission procedure.

With reference to the thirteenth aspect, in some implementations of the thirteenth aspect, that the terminal device obtains service data from a core network based on a support case of the terminal device for the at least one multicast key transmission procedure includes: The terminal device determines that the terminal device supports a target multicast key transmission procedure in the at least one multicast key transmission procedure; the terminal device obtains the multicast key by using the target multicast key transmission procedure; and the terminal device obtains the service data from the first content delivery network element based on the multicast key.

With reference to the thirteenth aspect, in some implementations of the thirteenth aspect, that the terminal device obtains the service data from the first content delivery network element based on the multicast key includes: The terminal device performs, by using the multicast key, security deprotection on security-protected data received from the first content delivery network element through the multicast session, to obtain the service data.

With reference to the thirteenth aspect, in some implementations of the thirteenth aspect, that the terminal device obtains service data from the network side based on a support case of the terminal device for the at least one multicast key transmission procedure includes: The terminal device determines that the terminal device does not support all of the at least one multicast key transmission procedure; and the terminal device receives the service data from a second content delivery network element through a unicast session.

With reference to the thirteenth aspect, in some implementations of the thirteenth aspect, the terminal device has joined the multicast session, and the method further includes: The terminal device requests, from a session management network element, to leave the multicast session.

### BRIEF DESCRIPTION OF DRAWINGS

FIG. 1 and FIG. 2 each are a diagram of a network architecture applicable to embodiments of this application;
FIG. 3 is a diagram of a multicast session configuration process;
FIG. 4 is a diagram of a security capability exposure mechanism negotiation procedure and a user service registration procedure;
FIG. 5A is a schematic flowchart of a method 500 according to an embodiment of this application;
FIG. 5B is a schematic flowchart of a method 520 according to an embodiment of this application;
FIG. 5C is a schematic flowchart of a method 540 according to an embodiment of this application;
FIG. 6 is a schematic flowchart of a method 600 according to an embodiment of this application;
FIG. 7 is a schematic flowchart of a method 700 according to an embodiment of this application;
FIG. 8 is a schematic flowchart of a method 800 according to an embodiment of this application;
FIG. 9A is a schematic flowchart of a method 900 according to an embodiment of this application;
FIG. 9B and FIG. 9C are two logical determining flowcharts according to an embodiment of this application;
FIG. 10 is a schematic flowchart of a method 1000 according to an embodiment of this application;
FIG. 11 is a block diagram of a communication apparatus according to an embodiment of this application;
FIG. 12 is a block diagram of a communication apparatus according to another embodiment of this application; and
FIG. 13 is a block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In descriptions of this application, unless otherwise specified, "a plurality of" means two or more than two.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

In this specification, the claims, and the accompanying drawings of this application, the terms "first", "second", "third", "fourth", and various other ordinal number terms (if existent) are intended to distinguish between similar objects, but do not necessarily indicate a specific order or sequence. It should be understood that the terms in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

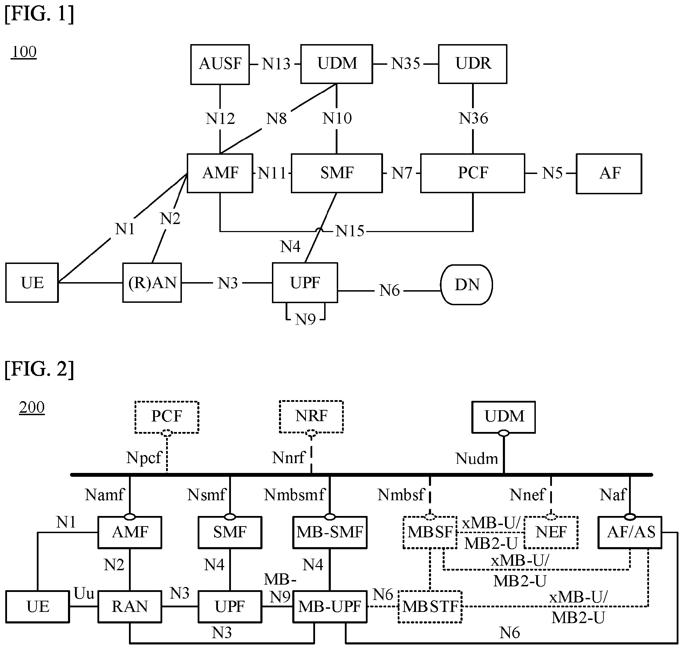

The following describes, by using an example with reference to FIG. 1, a 5G system applicable to embodiments of this application. It should be understood that the 5G system described in this specification is merely an example, and should not constitute any limitation on this application.

As shown in FIG. 1, a network architecture is, for example, a 5G system (5th generation system, 5GS) defined in a 3rd generation partnership project (3rd Generation Partnership Project, 3GPP) protocol TS23.501. The network architecture may be divided into two parts: an access network (access network, AN) and a core network (core network, CN). The access network may be used to implement functions related to radio access, and the core network mainly includes the following several key logical network elements: an access and mobility management function (access and mobility management function, AMF), a session management function (session management function, SMF), a user plane function (user plane function, UPF), a policy control function (policy control function, PCF), a unified data management (unified data management, UDM), and the like.

The following briefly describes the network elements shown in FIG. 1.
1. A UE may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device that has a wireless connection function. Currently, some examples of the terminal may be a mobile phone (mobile phone), a tablet computer (pad), a computer (for example, a laptop computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. In an IoT technology, massive connections, deep coverage, and terminal power saving can be implemented by using, for example, a narrowband (narrowband, NB) technology.

In addition, the terminal device may further include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device capable of accessing a network. The terminal device may communicate with an access network device by using an air interface technology.

Optionally, the user equipment may serve as a base station. For example, the user equipment may serve as a scheduling entity that provides a sidelink signal between user equipments in V2X, D2D, or the like. For example, a cellular phone and a car communicate with each other by using a sidelink signal. The cellular phone communicates with a smart household device without relaying a communication signal through a base station.

2. The (radio) access network ((radio) access network, (R)AN) device is configured to provide a network access function for an authorized user equipment in a specific area, and can use transmission tunnels of different quality of service based on a level of the user equipment, a service requirement, and the like.

The (R)AN can manage radio resources and provide an access service for the user equipment, to forward a control signal and user equipment data between the user equipment and the core network. The (R)AN may also be understood as a base station in a conventional network.

For example, the access network device in embodiments of this application may be any communication device having a wireless transceiver function for communicating with the user equipment. The access network device includes but is not limited to an evolved NodeB (evolved NodeB, eNB), a gNB or a transmission point (TRP or TP) in a 5G system, for example, an NR system, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in the access network (radio access network, RAN), or the CU may be classified as an access network device in the core network (core network, CN). This is not limited in this application.

3. The user plane function (user plane function, UPF) network element is used for packet routing and forwarding, quality of service (quality of service, QoS) handling for user plane data, and the like. For ease of description, in embodiments of this application, the user plane function network element is referred to as a "UPF" for short.

In a future communication system, the user plane network element may still be the UPF network element, or may have another name. This is not limited in this application.

4. Access and mobility management function (access and mobility management function, AMF) network element: The access and mobility management function network element is mainly configured to perform mobility management, access management, and the like, and may be configured to implement another function other than session management in an MME function, for example, an access authorization/authentication function. For ease of description, in embodiments of this application, the access and mobility management function network element is referred to as an "AMF" for short.

In the future communication system, an access and mobility management device may still be the AMF, or may have another name. This is not limited in this application.

5. The session management function (session management function, SMF) network element is mainly configured to manage a session, allocate and manage an internet protocol (internet protocol, IP) address of a user equipment, select a termination point that can manage a user plane function, policy control, and a charging function interface, notify downlink data, and the like. For ease of description, in embodiments of this application, the session management function network element is referred to as an "SMF" for short.

The SMF is a type of session management network element. In the future communication system, the session management network element may still be the SMF, or may have another name. This is not limited in this application.

6. The policy control function (policy control function, PCF) network element is a unified policy framework for guiding network behavior, and provides policy rule information and the like for a control plane function network element (such as the AMF or the SMF).

In the future communication system, the policy control network element may still be the PCF network element, or may have another name. This is not limited in this application.

7. An Application function (application function, AF) network element is configured to perform application-affected data routing, wirelessly access a network exposure function network element, and interact with a policy framework for policy control, and the like. For ease of description, in embodiments of this application, the application function network element is referred to as an "AF" for short.

In the future communication system, the application function network element may still be the AF network element, or may have another name. This is not limited in this application.

8. The unified data management (unified data management, UDM) network element is configured to perform UE identifier processing, access authentication, registration, mobility management, and the like.

In the future communication system, the unified data management may still be the UDM network element, or may have another name. This is not limited in this application.

9. An authentication server (authentication server function, AUSF) network element is configured to provide an authentication service, generate a key to implement two-way authentication for the user equipment, and support a unified authentication framework.

In the future communication system, the authentication server function network element may still be the AUSF network element, or may have another name. This is not limited in this application.

10. A network data analytics function (network data analytics function, NWDAF) network element is configured to identify a network slice instance, and load load-level information of the network slice instance. The network data analytics function enables NF consumers to subscribe to or unsubscribe from periodic notifications and notify the consumers when a threshold is exceeded.

In the future communication system, the network data analytics function network element may still be the NWDAF network element, or may have another name. This is not limited in this application.

11. Data network (data network, DN): The DN is a network beyond an operator network. The operator network may access a plurality of DNs, and a plurality of services may be deployed on the DN, to provide a service such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In the network architecture shown in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identifier information of an N3 connection, data buffering indication information, and a downlink data notification message. The UPF and the DN may interact with each other through an N6 interface, and the N6 interface may be for transmitting user plane data and the like. A relationship between other interfaces and the network elements is shown in FIG. 1. For brevity, details are not described herein. The following briefly describes names and functions of the interfaces between the network elements:
(1) N7 is an interface between the PCF and the SMF, and is configured to deliver a control policy corresponding to a protocol data unit (protocol data unit, PDU) session or a control policy corresponding to a service data flow.
(2) N15 is an interface between the PCF and the AMF, and is configured to deliver a UE policy and an access control related policy.
(3) N5 is an interface between the AF and the PCF, and is configured to deliver an application service request and report a network event.
(4) N4 is an interface between the SMF and the UPF, and is configured to transfer information between a control plane and a user plane, including delivery of a forwarding rule, a QoS control rule, a traffic statistics rule, and the like that are from the control plane to the user plane, and information report by the user plane.
(5) N11 is an interface between the SMF and the AMF, and is configured to transfer PDU session tunnel information between the RAN and the UPF, transfer a control message sent to the UE, transfer radio resource control information sent to the RAN, and the like.
(6) N2 is an interface between the AMF and the RAN, and is configured to transfer radio bearer control information from a core network side to the RAN, and the like.
(7) N1 is an interface between the AMF and the UE, is access-irrelevant, and is configured to transfer a QoS control rule and the like to the UE.
(8) N8 is an interface between the AMF and the UDM, and is used by the AMF to obtain access and mobility management-related subscription data and authentication data from the UDM, and register current mobility management-related information of the UE with the UDM.
(9) N10 is an interface between the SMF and the UDM, is used by the SMF to obtain session management-related subscription data from the UDM, and is used by the SMF to register current session-related information of the UE with the UDM.
(10) N35 is an interface between the UDM and a UDR, and is used by the UDM to obtain user subscription data information from the UDR.
(11) N36 is an interface between the PCF and the UDR, and is used by the PCF to obtain policy-related subscription data and application data-related information from the UDR.
(12) N12 is an interface between the AMF and the AUSF, and is used by the AMF to initiate an authentication procedure to the AUSF, where a SUCI may be carried as a subscription identifier.
(13) N13 is an interface between the UDM and the AUSF, and is used by the AUSF to obtain a user authentication vector from the UDM, to perform the authentication procedure.

FIG. 2 is a diagram of a multicast/broadcast service architecture applicable to a method provided in an embodiment of this application. The multicast/broadcast service architecture and functions shown in FIG. 2 are defined as an enhancement based on a unicast network architecture and functions. The following briefly describes a function of each network element in FIG. 2 specific to a multicast/broadcast service.
1. UE: The UE has main functions of receiving multicast data through PTM/PTP, receiving groupcast/broadcast data through PTM, processing QoS, initiating session join (session join) and session leave (session leave), and managing resources on a 5G MBS terminal side.
2. RAN: The RAN is mainly responsible for processing an MBS QoS flow, sending data to the UE through point-to-multipoint (point-to-multipoint, PTM) and point-to-point (point-to-point, PTP), configuring an AS layer to receive a broadcast flow, switching between PTM and PTP, supporting Xn and N2 switching of a multicast session, processing session signaling, establishing air interface broadcast and multicast resources, and the like.
3. AMF: The AMF is mainly responsible for signaling routing (from an NG-RAN to an MB-SMF) and selecting broadcast NG-RANs.
4. SMF: To support a 5G MBS characteristic, a unicast SMF needs to be enhanced, which is mainly reflected by adding the following functions: MB-SMF discovery, UE joining authentication, interaction with the MB-SMF to manage a multicast session context, and interaction with the RAN to establish a multicast transmission resource.
5. UPF: The UPF is mainly responsible for interacting with an MB-UPF to receive multicast data transmitted in an individual delivery mode, and transmitting, to the UE through a PDU session, multicast data transmitted in the individual delivery mode.
6. PCF: The PCF is mainly responsible for performing QoS processing for a multicast/broadcast service (multicast/broadcast service, MBS) session, providing policy information for the multicast/broadcast SMF (multicast/broadcast SMF, MB-SMF), interacting with a user data repository (user data repository, UDR) to obtain QoS information, and the like. The PCF is an optional network element. The function entity is required only when a dynamic policy charging control (policy charging control, PCC) is used.
7. Multicast/broadcast session management function (multicast/broadcast session management function, MB-SMF) network element: The MB-SMF is an entity that supports a broadcast characteristic. The MB-SMF may further have a function of the unicast SMF. Specifically, the MB-SMF is responsible for MBS session management, including QoS control and the like, multicast/broadcast (multicast/broadcast UPF, MB-UPF) configuration, interaction with the RAN to control broadcast flow (flow) transmission (broadcast session specific function), interaction with the SMF to associate a protocol data unit (protocol data unit, PDU) session, interaction with the RAN to control multicast flow transmission (multicast session specific function), and the like. For ease of description, in embodiments of this application, the multicast/broadcast session management function network element is referred to as a multicast session management function network element or the "MB-SMF" for short. The MB-SMF is a type of multicast session management network element. In a future communication system, the multicast session management network element may still be the MB-SMF, or may have another name. This is not limited in this application.
8. Multicast/broadcast user plane function (multicast/broadcast user plane function, MB-UPF) network element: The MB-UPF is a data plane gateway of a 5G MBS, and is mainly responsible for interacting with the MB-SMF to obtain a data forwarding rule, transmitting multicast data to the RAN by using a shared delivery method (shared delivery method), and transmitting multicast data to the UPF by using an individual delivery method (individual delivery method). For ease of description, in embodiments of this application, the multicast/broadcast user plane function network element is referred to as a multicast user plane function network element or the "MB-UPF" for short.
9. Multicast/broadcast service function (multicast/broadcast service function, MBSF): The MBSF mainly supports the following functions: service layer functions, interworking with an LTE MBS, interaction with an AF and the MB-SMF to support an operation of the MBS session, determining a transmission parameter and a type of the MBS session, selecting the MB-SMF to control an MBSTF, determining an IP multicast address of a sender, and the like. The MBSF is an optional network element. For ease of description, in embodiments of this application, the multicast/broadcast service function network element is referred to as a multicast service function network element or the "MBSF" for short.
10. Multicast/Broadcast service transport function (multicast/broadcast service transport function, MBSTF): The MBSTF mainly supports the following functions: an anchor of MBS data, serving as a source of IP multicast, supporting general transmission functions such as a frame, a multi-flow, and forward error correction (forward error correction, FEC), sending an input file as an object (object) or an object flow (object flow) in a multicast or broadcast manner, and the like. The MBSTF is an optional network element. For ease of description, in embodiments of this application, the multicast/broadcast service transport function network element is referred to as a multicast service transport function network element or the "MBSTF" for short.
11. AF: The AF mainly supports the following functions: providing service information to a 5G core network (5G core network, 5GC), requesting a multicast or broadcast service, indicating (instruct) an operation of an MBS session between the AF and the 5GC, and the like.
12. UDM: The UDM mainly supports multicast session subscription/subscription management and the like.
13. NRF: The NRF is mainly information about a core network element, and mainly includes the following functions in terms of supporting an MBS characteristic: supporting management on the MB-SMF that serves the MBS session, specifically including storing an ID of the MBS session served by the MB-SMF.
14. NEF: The NEF is mainly responsible for the following functions in terms of supporting the MBS characteristic: selecting the MB-SMF, interacting with the AF and the MB-SMF to implement an MBS session operation, determining a transmission parameter, providing the AF with an interface for a 5G MBS procedure, such as a service configuration interface, an MBS session configuration interface, and a QoS management interface.

In FIG. 2, Nausf, Nnef, Npcf, Nudm, Naf, Namf, Nsmf, N1, N2, N3, N4, and N6 are interface sequence numbers. For meanings of the interface sequence numbers, refer to meanings defined in a 3GPP standard protocol. This is not limited herein.

It should be understood that the foregoing network architecture applied to embodiments of this application is merely an example of a network architecture described from the perspective of a conventional point-to-point architecture and a service-oriented architecture, and a network architecture applicable to embodiments of this application is not limited thereto. Any network architecture that can implement the functions of the foregoing network elements is applicable to embodiments of this application.

It should be further understood that the core network elements shown in FIG. 1 and FIG. 2 may be understood as network elements configured to implement different functions in the core network, for example, may be combined into a network slice as required. These core network elements may be independent devices, or may be integrated into a same device to implement different functions. A specific form of the foregoing network elements is not limited in this application.

It should be further understood that the names are defined merely for ease of distinguishing between different functions, and should not constitute any limitation on this application. This application does not exclude a possibility that another name is used in the 5G network and another future network. For example, in a 6G network, some or all of the foregoing network elements may still use terms in 5G, or may use other names. A name of an interface between the network elements in FIG. 1 is merely an example. In a specific implementation, the name of the interface may be another name. This is not specifically limited in this application. In addition, names of messages (or signaling) transmitted between the foregoing network elements are merely examples, and do not constitute any limitation on functions of the messages.

It may be understood that the foregoing network element or function may be a network element in a hardware device, may be a software function running on dedicated hardware, or may be a virtualized function instantiated on a platform (for example, a cloud platform). For ease of description, in this application, an example in which the network device is an access and mobility management function AMF and the base station is a radio access network RAN is used for description below.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The aspects or features of embodiments of this application may be implemented as a method, or implemented by using an apparatus or a product of standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

To facilitate understanding of the technical solutions in embodiments of this application, before the solutions in embodiments of this application are described based on a 5G architecture, some terms or concepts in 5G that may be used in embodiments of this application, and network elements that may be used in this application but are not shown in the foregoing network architecture are first briefly described.

### 1. Unicast session

The unicast session in embodiments of this application is a session between a content delivery network element (that is, a core network element responsible for delivering service data) and a single UE. The content delivery network element delivers/transmits content (a data packet) to the UE through the session.

For example, the content delivery network element corresponding to the unicast session may be a user plane function network element (UPF) in a 3GPP architecture. Correspondingly, the unicast session may be a protocol data unit (protocol data unit, PDU) session in the 3GPP architecture. It may be understood that the unicast session may alternatively be a session between the content delivery network element and the single UE in another form. This is not limited herein in embodiments of this application.

### 2. Multicast session

The multicast session in embodiments of this application is a session between a content delivery network element (that is, a core network element responsible for delivering service data) and a plurality of UEs. The content delivery network element delivers/transmits same content (a same data packet) to the plurality of UEs through the session. The UE that receives the same content transmitted through the same multicast session may belong to one service, one application, or one group. In other words, data of one multicast session may correspond to one service, one application, or one group (for example, a group in an emergency service, that is, push to talk, or a group in an internet of vehicles application), or in other words, one service, one application, or one group may correspond to one multicast session. The terminal device may join a multicast session to receive content delivered/transmitted by the content delivery network element through the multicast session. For example, the multicast session may be a groupcast session or a broadcast session. The groupcast session is a session between the content delivery network element and a group of UEs, and the content delivery network element delivers/transmits same content (a same data packet) to the group of UEs through the session. The broadcast session is a session between the content delivery network element and all UEs in an area, and the content delivery network element delivers/transmits same content (a same data packet) to all the UEs in the area through the session. It may be understood that the multicast session may alternatively be a session between the content delivery network element and the plurality of UEs in another form. This is not limited in this embodiment of this application.

For example, the content delivery network element corresponding to the multicast session may be a multicast user plane function network element (MB-UPF) in the 3GPP architecture, or a multicast service transport function network element or a multicast service function network element in the 3GPP architecture. Correspondingly, the multicast session may be an MBS session in the 3GPP architecture. For ease of differentiation, in embodiments of this application, the content delivery network element corresponding to the multicast session is referred to as a first content delivery network element, and the content delivery network element corresponding to the unicast session is referred to as a second content delivery network element.

### 3. Transmission of multicast service data

In a 3GPP network, a user service/application needs to send same data to a plurality of user equipments (UEs), that is, point-to-multipoint data transmission is required. The user service/application includes a multimedia message service, a data stream service, a group communication service, and the like.

A multicast/broadcast/unicast session is established, so that a network provides a bearer shared by a plurality of receivers. A sender needs to send only one copy of data. A network side duplicates the sent data as required and transmits the duplicated data to the plurality of receivers or sends one copy of data to the plurality of receivers in a multicast transmission manner.

The user service may be carried by one or more sessions. Correspondingly, one user service identifier corresponds to one or more MBS session identifiers.

### 4. Multicast key

The multicast key is a security transmission key of a multicast session between the terminal device and the multicast user plane function network element. In other words, the multicast key is used to perform security protection on the multicast session between the terminal device and the content delivery network element. The multicast key may also be referred to as a multicast communication key, a multicast session key, or the like. This is not limited in this application.

For example, the multicast key includes a multicast service key (MBS Service Key, MSK) and a multicast transmission key (MBS traffic key, MTK). The MTK is used to perform security protection on service data, and the MSK is used to perform security protection on the MTK. In other words, the "performing security protection on the multicast session between the terminal device and the content delivery network element" may be performing security protection on the service data by using the MTK, and performing security protection on the MTK by using the MSK.

It may be understood that the multicast key in embodiments of this application may be alternatively expressed as a multicast session context. The multicast session context includes one or more of the MSK, the MTK, key identifiers corresponding to the MSK and the MTK, and a key life cycle.

### 5. Multicast key transmission procedure

The multicast key transmission procedure is a communication procedure used by the network side to transmit the multicast key to the terminal device. It may be understood that the multicast key transmission procedure is not limited to multicast key transmission. In other words, the multicast key transmission procedure is not necessarily a communication procedure specially used to transmit the multicast key. For example, the multicast key transmission procedure in embodiments of this application may be a procedure of transmitting the multicast key by reusing an existing communication procedure.

There are a plurality of multicast key transmission processes, including but not limited to the following:

A first multicast key transmission procedure is a signaling-plane (also referred to as a "control-plane") communication procedure (control-plane procedure) between a session management network element and the terminal device, and is specifically a communication procedure in which a multicast service network element transmits the multicast key to the terminal device by using a user signaling-plane message. For ease of description, the communication procedure is referred to as a "signaling-plane multicast key transmission procedure" in embodiments of this application, and is denoted as a "C procedure". The multicast service network element herein may be, for example, a multicast service transport function network element.

A second multicast key transmission procedure is an authentication and key management for applications-based user-plane communication procedure (authentication and key management for applications-based user-plane procedure, AKMA-based user-plane procedure) between the multicast service network element and the terminal device, and is specifically a communication procedure in which the multicast key is transmitted through a key transmission security channel established between the multicast service network element and the terminal device based on an authentication credential generated through authentication and key management for applications. For ease of description, the second multicast key transmission procedure is referred to as a "first user-plane multicast key transmission procedure" in embodiments of this application, and is denoted as a "U1 procedure".

A third multicast key transmission procedure is a generic bootstrapping architecture-based user-plane communication procedure (generic bootstrapping architecture-based user-plane procedure, GBA-based user-plane procedure) between the multicast service network element and the terminal device, and is specifically a communication procedure in which the multicast key is transmitted through a key transmission security channel established between the multicast service network element and the terminal device based on an authentication credential generated through a generic bootstrapping architecture. For ease of description, the third multicast key transmission procedure is referred to as a "second user-plane multicast key transmission procedure" in embodiments of this application, and is denoted as a "U2 procedure".

The first user-plane multicast key transmission procedure and the second user-plane multicast key transmission procedure may be collectively referred to as a user-plane multicast key transmission procedure (referred to as a "user-plane procedure" for short, user-plane procedure). In other words, the user-plane multicast key transmission procedure in embodiments of this application is the first user-plane multicast key transmission procedure or the second user-plane multicast key transmission procedure.

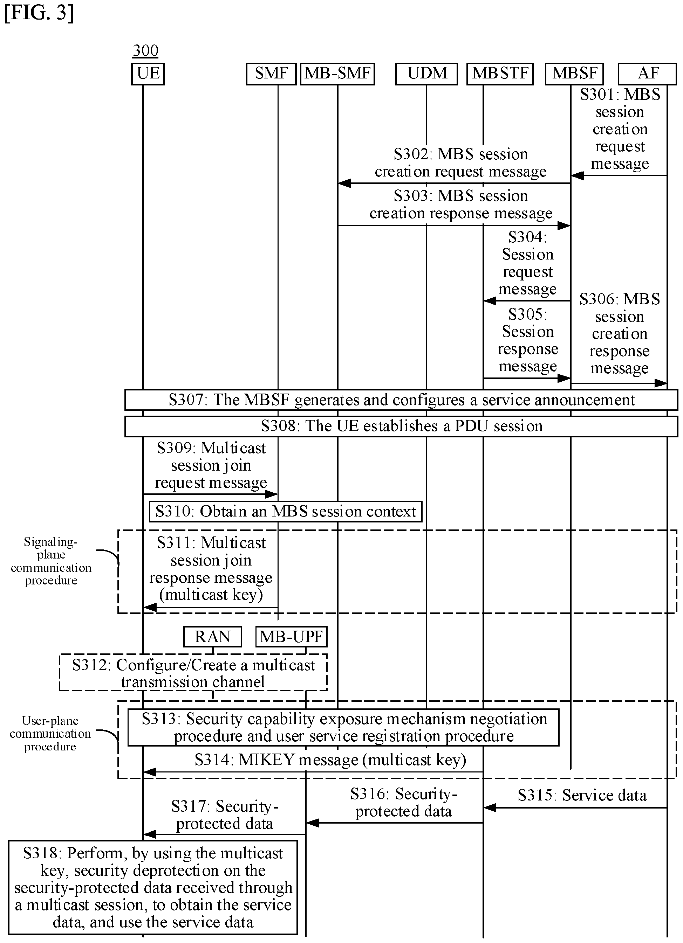

It may be understood that the multicast key transmission procedure in embodiments of this application may be considered as a set of messages exchanged between devices, and includes an interaction process of one or more messages used by the network side to transmit the multicast key to the terminal device. A method 300 in FIG. 3 is used as an example. The C procedure includes a multicast session join response message (S311) in FIG. 3, and the U1 procedure includes a multimedia internet key management (multimedia internet keying, MIKEY) message (S314) in FIG. 3. However, it may be understood that, in an implementation, in addition to S311, the C procedure may further include another message, for example, an MBS session creation request message (S302) in FIG. 3. This is not limited in this application. In addition to S314, the U1 procedure or the U2 procedure may also include another message, for example, a message in a security capability exposure mechanism negotiation procedure and a user service registration procedure (S313). This is not limited in this application. For meanings of the foregoing messages, refer to descriptions in the method 300.

In subsequent embodiments of this application, it is mentioned that the network side/the terminal device supports/does not support a multicast key transmission procedure. The following explanations are first provided, and details are not described subsequently.

That the network side supports the C procedure means that a network element (for example, the session management network element) on the network side can send the multicast key to the terminal device by using a signaling-plane message (for example, a response message in S311) in the C procedure, or the network element (for example, the session management network element) on the network side can send the multicast key to the terminal device in a procedure in which the terminal device joins the multicast session, or the network element (for example, the session management network element) on the network side can send the multicast key to the terminal device by using a non-access stratum message (for example, the response message in S311). Correspondingly, that the network side does not support the C procedure means that the network element (for example, the session management network element) on the network side cannot send the multicast key to the terminal device by using the signaling-plane message in the C procedure, or the network element on the network side cannot send the multicast key to the terminal device in the procedure in which the terminal device joins the multicast session, or the network element on the network side cannot send the multicast key to the terminal device by using the non-access stratum message. That the terminal device supports the C procedure means that the terminal device can obtain the multicast key by using the signaling-plane message (for example, the response message in S311) in the C procedure, or the terminal device can obtain the multicast key in the procedure of joining the multicast session, or the terminal device can receive the multicast key by using the non-access stratum message. Correspondingly, that the terminal device does not support the C procedure means that the terminal device cannot obtain the multicast key by using the signaling-plane message, or the terminal device cannot obtain the multicast key in the procedure of joining the multicast session, or the terminal device cannot receive the multicast key by using the non-access stratum message.

That the network side supports the U1 procedure means that a network element (for example, the multicast service network element) on the network side can send, to the terminal device by using the U1 procedure, the multicast key protected by using an authentication and key management for applications mechanism, or the network element on the network side can send, to the terminal device by using a user-plane message (for example, a MIKEY message in S314), the multicast key protected by using the authentication and key management for applications mechanism, or the network element (for example, the multicast service network element) on the network side can send, to the terminal device after a user service registration procedure (for example, S313) of the terminal device is completed, the multicast key protected by using the authentication and key management for applications mechanism, or the network element (for example, the multicast service network element) on the network side can send, to the terminal device by using a multimedia internet key management message (for example, the MIKEY message in S314), the multicast key protected by using the authentication and key management for applications mechanism. Correspondingly, that the terminal device supports the U1 procedure means that the terminal device can obtain, by using the U1 procedure, the multicast key protected by using the authentication and key management for applications mechanism, or the terminal device can receive, by using the user-plane message (for example, the MIKEY message in S314), the multicast key protected by using the authentication and key management for applications mechanism, or the terminal device can receive, after the user service registration procedure (for example, S313) is completed, the multicast key protected by using the authentication and key management for applications mechanism, or the terminal device can receive, by using the multimedia internet key management message (for example, the MIKEY message in S314), the multicast key protected by using the authentication and key management for applications mechanism.

That the network side supports the U2 procedure means that the network element (for example, the multicast service network element) on the network side can send, to the terminal device by using the U2 procedure, the multicast key protected by using a generic bootstrapping architecture mechanism, or the network element on the network side can send, to the terminal device by using the user-plane message (for example, the MIKEY message in S314), the multicast key protected by using the generic bootstrapping architecture mechanism, or the network element (for example, the multicast service network element) on the network side can send, to the terminal device after the user service registration procedure (for example, S313) of the terminal device is completed, the multicast key protected by using the generic bootstrapping architecture mechanism, or the network element (for example, the multicast service network element) on the network side can send, to the terminal device by using the multimedia internet key management message (for example, the MIKEY message in S314), the multicast key protected by using the generic bootstrapping architecture mechanism. Correspondingly, that the terminal device supports the U2 procedure means that the terminal device can obtain, by using the U2 procedure, the multicast key protected by using the generic bootstrapping architecture mechanism, or the terminal device can receive, by using the user-plane message (for example, the MIKEY message in S314), the multicast key protected by using the generic bootstrapping architecture mechanism, or the terminal device can receive, after the user service registration procedure (for example, S313) is completed, the multicast key protected by using the generic bootstrapping architecture mechanism, or the terminal device can receive, by using the multimedia internet key management message (for example, the MIKEY message in S314), the multicast key protected by using the generic bootstrapping architecture mechanism.

### 6. Service data

In this application, the service data is data sent by a service provider (for example, an application service provider) to the UE via an application server, to provide a service. The 5G system has a plurality of manners of sending the service data, for example, a unicast sending manner and a multicast sending manner. The unicast sending manner means that the application server enables the service data to be sent the UE through the PDU session. Specifically, in this form, the UE and the application server use independent IP addresses, the application server sends the service data to the UPF, and the UPF processes the service data and sends processed service data to the UE through a bearer of the PDU session. The multicast sending manner means that the application server enables the service data to be sent the UE through the multicast session. In this form, the application server sends one copy of data packet to the MB-UPF, and the MB-UPF processes the data packet and sends a processed data packet to the UE. Specifically, the data packet may be sent in a 5GC individual data sending manner, or may be sent in a 5GC shared data sending manner. The individual data sending manner means that the MB-UPF triggers a UPF cascaded to the MB-UPF to send the service data to the UE through the PDU session. The shared data sending manner means that the MB-UPF sends the service data to the UE through the multicast session.

The foregoing describes, with reference to FIG. 1 and FIG. 2, an example system architecture applicable to embodiments of this application, and further briefly describes basic concepts in this application. The following describes in detail a communication method and apparatus provided in this application with reference to the accompanying drawings.

A specific structure of an execution body of the method provided in embodiments of this application is not particularly limited in the following embodiments, provided that a program that records code of the method provided in embodiments of this application can be run to perform communication according to the method provided in embodiments of this application. For example, the method provided in embodiments of this application may be performed by a core network device and a terminal device, or a functional module that can invoke and execute the program in the core network device or the terminal device.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.

Second, various numeric numbers such as first and second (for example, "#1" and "#2") shown in this application are merely for ease of description, and are used to distinguish between objects, but are not intended to limit the scope of embodiments of this application, for example, are used to distinguish between different messages, but are not for describing a particular order or sequence. It should be understood that the objects described in such a way are interchangeable in an appropriate circumstance, so that a solution other than embodiments of this application can be described.

Third, the terms "include" and "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

Fourth, in this application, "preconfiguration" may include "predefined", for example, defined in a protocol. "Predefined" may be implemented in a manner of prestoring corresponding code, a table, or other related information that may be used for indication in a device (for example, including network elements). A specific implementation is not limited in this application.

Fifth, "store" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Sixth, "protocols" in embodiments of this application may be standard protocols in the communication field, for example, may include a 5G protocol, a new radio (new radio, NR) protocol, and a related protocol applied to a future communication system. This is not limited in this application.

Seventh, dashed boxes in the method flowcharts in the accompanying drawings of this specification of this application indicate optional steps.

The following describes in detail the communication method provided in embodiments of this application by using interaction between network elements as an example. It should be understood that, for terms and steps in embodiments of this application, refer to each other.

FIG. 3 shows a multicast session configuration process. The following describes a method 300 by using an example with reference to steps in FIG. 3.

S301: An AF sends an MBS session creation request (Nnef_MBSSession_create_request) message to an MBSF. Correspondingly, the MBSF receives the MBS session creation request message from the AF.

For example, the AF sends the MBS session creation request message to the MBSF to request to create an MBS session, where the MBS session creation request message carries an MBS session identifier (MBS session ID), a QoS parameter, a security policy, and other information. The QoS parameter indicates a quality of service requirement of a current session, and the QoS parameter includes parameters such as a 5G QoS identifier and an allocation and retention priority. The security policy indicates whether the current session requires (including requires and does not require) a core network to provide confidentiality and/or integrity security protection.

S302: The MBSF sends an MBS session creation request (Nmbsmf_MBSSession_create_request) message to an MB-SMF. Correspondingly, the MB-SMF receives the MBS session creation request message from the MBSF/a NEF.

For example, the MBSF/NEF sends the MBS session creation request message to the MB-SMF, to request the MB-SMF to establish an MBS session and configure an MBS session parameter. The MBS session creation request message carries the MBS session identifier, the QoS parameter, and other information.

S303: The MB-SMF sends an MBS session creation response (Nmbsmf_MBSSession_create_response) message to the MBSF. Correspondingly, the MBSF receives the MBS session creation response message from the MB-SMF.

For example, after receiving the MBS session creation request message from the MBSF, the MB-SMF configures an MB-UPF. For a specific process, refer to an existing protocol. This is not limited in this application. Then, the MB-SMF sends the MBS session creation response message to the MBSF, and the MB-SMF includes an ingress address (ingress address) allocated to the MBSF in the MBS session creation response message.

S304: The MBSF sends a session request (Session request) message to an MBSTF, where the session request message includes the ingress address and the MBS session identifier. Correspondingly, the MBSTF receives the session request message from the MBSF.

S305: The MBSTF sends a session response (Session response) message to the MBSF/NEF. Correspondingly, the MBSF receives the session response message from the MBSTF.

For example, after receiving the session request message from the MBSF/NEF, the MBSTF selects an ingress address (IP address and port), and provides the selected ingress address to the MBSF by using the session response message.

S306: The MBSF sends an MBS session creation response (Nnef_MBSSession_Create_response) message to the AF. Correspondingly, the AF receives the session creation response message from the MBSF.

For example, the MBSF indicates, to the AF by using the session creation response message, a possibly allocated ingress address and another parameter (for example, a TMGI). A detailed process is not limited in this application.

S307: The MBSF generates and configures a service announcement.

For example, the MBSF generates the service announcement (service announcement), where the service announcement is used to deliver information (for example, an IP multicast address(es)) about a service required for service reception and another possible service-related parameter (for example, service start time) to a UE. The service announcement includes parameters such as a user service identifier (user service ID), the MBS session identifier, a service area, the start time, and a security service description. The security service description includes parameters such as an MBSTF IP address, an identifier of a service key MSK required for a user service, and the like. When the service announcement includes the security service description, it indicates that a current user service requires security protection. When the service announcement does not include the security service description, it indicates that a current user service does not require security protection.

Further, the MBSF sends the service announcement to the UE, where the message may be sent to the UE in a form of an SMS message, a unicast session, a multicast session, or the like. This is not limited herein. It should be understood that after generating the service announcement, the MBSF may send the service announcement to the AF, and the AF sends the service announcement to the UE. This is not limited in this application.

It should be understood that S307 may be performed before S301, or may be performed at any moment after S301. This is not limited in this application.

S308: The UE establishes a PDU session through a network side. A specific process is not limited in this application.

S309: The UE sends a multicast session join request message to an SMF. Correspondingly, the SMF receives the multicast session join request message from the UE.

For example, after establishing the PDU session, the UE may initiate an MBS session join procedure based on the service announcement. For example, the UE sends the multicast session join request message to the SMF, where the multicast session message carries the MBS session identifier, the MBS session identifier is obtained by the UE from the service announcement, and the multicast session join request message may also be referred to as a UE join request (UE_join_request) message. The multicast session join request message is sent by the UE to an AMF, and the AMF processes the multicast session join request message and sends the multicast session join request message to the SMF. Specifically, the UE join request message may be a PDU session modification request (PDU Session Modification Request) message.

It should be understood that the UE may alternatively request to join the MBS session in a PDU session establishment process. In other words, S308 and S309 may be combined into one step. For example, the UE may include the MBS session identifier in a PDU session establishment request message, to request to join the MBS session corresponding to the MBS session identifier. A specific process is not limited in this application.

S310: The SMF obtains an MBS session context through the MB-SMF.

For example, if the SMF does not have the MBS session context, the SMF requests to obtain the MBS session context from the MB-SMF. A specific process is not limited in this application.

It may be understood that if the MB-SMF receives a multicast key from the MBSF in S302, the MBS session context includes the multicast key.

S311: The SMF sends a multicast session join response message to the UE. Correspondingly, the UE receives the UE join response message from the SMF.

For example, after checking authorization of the UE, the SMF configures a bearer of the MBS session, and then sends the multicast session joining response message to the UE through the AMF. The multicast session join response message may also be referred to as the UE join response (UE_join_response) message. Specifically, the message may be a PDU session modification command (PDU Session Modification Command) message.

It may be understood that if the MBS session context obtained by the SMF from the MB-SMF in S310 includes the multicast key, the SMF includes the multicast key in the UE join response message. Correspondingly, after receiving the UE join response message from the SMF, the UE obtains the multicast key from the UE join response message. In this manner, the network side distributes the multicast key to the UE by using a signaling-plane communication procedure.

Optionally, in S312, the UE configures/creates a multicast transmission channel through a RAN and the MB-UPF. It should be understood that, after the multicast transmission channel is configured/created, the UE may receive service data from the MB-UPF.

MBS session configuration and bearer establishment can be implemented by using the foregoing process. Further, the network side may further send the multicast key to the UE, to protect security of multicast communication.

The following describes two transmission procedures in which the network side sends the multicast key to the UE.

In an implementation, the network side sends the multicast key to the UE by using a signaling-plane communication procedure (control-plane procedure). For example, the MBSF includes the multicast key in the MBS session creation request message in S302. After receiving the multicast key, the MB-SMF stores the multicast key in the MBS session context. After obtaining the MBS session context from the MB-SMF in S310, the SMF obtains the multicast key from the MBS session context, and then sends the UE join response message including the multicast key to the UE in S311.

In another implementation, the network side sends the multicast key to the UE by using a user-plane communication procedure (user-plane procedure). For example, in S313, the UE performs a security capability exposure mechanism negotiation procedure and a user service registration procedure through a multicast function network element, where the multicast function network element herein includes the MBSF or the MBSTF. After the user service registration procedure is successfully performed, in S314, the UE receives the multicast key by using a MIKEY message sent by the MBSTF. It should be noted that, if a security capability exposure mechanism negotiated by the UE and the network side is an AKMA mechanism, the UE and the MBSTF generate an application key by using AKMA, where the application key is used to perform security protection on a multicast service key, and the multicast service key is used to perform security protection on the multicast key (which is a multicast transmission key herein) transmitted in the MIKEY message. If a security capability exposure mechanism negotiated by the UE and the network side is a GBA mechanism, the UE and the MBSTF generate an application key by using a GBA, where the application key is used to perform security protection on a multicast service key, and the multicast service key is used to perform security protection on the multicast key (which is a multicast transmission key herein) transmitted in the MIKEY message.

The following briefly describes a multicast communication process with reference to S315 to S318.

S315: The AF sends service data to the MBSTF. Correspondingly, the MBSTF receives the service data from the MBSTF.

S316: The MBSTF sends security-protected service data to the MB-UPF.

For example, after receiving the service data from the AF, the MBSTF performs security protection on the service data by using the multicast key, to obtain the security-protected data, and then sends the security-protected data to the MB-UPF.

S317: The MB-UPF sends the security-protected data to the UE. Correspondingly, the UE receives the security-protected data from the MB-UPF.

For example, after receiving the security-protected data from the MBSTF, the MB-UPF sends the security-protected data to the UE through the multicast session (that is, the multicast transmission channel between the UE and the MB-UPF).

S318: The UE performs, by using the multicast key, security deprotection on the security-protected data received through the multicast session, to obtain the service data, and use the service data

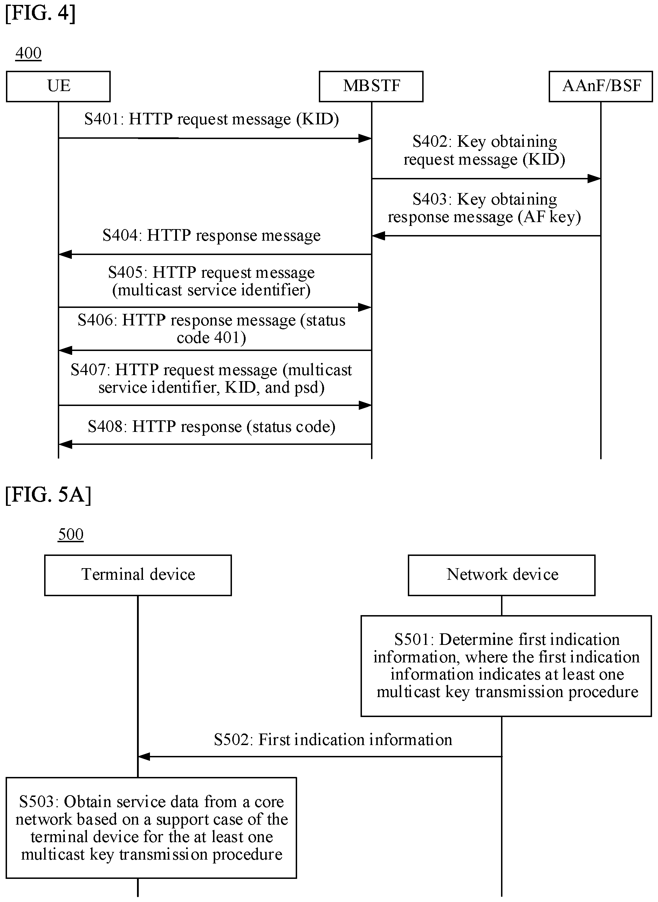

FIG. 4 is a schematic flowchart of a method 400 according to an embodiment of this application. The method 400 describes a security capability exposure mechanism negotiation procedure and a user service registration procedure that are performed between a UE and an MBSTF.

S401: The UE sends an HTTP request message to the MBSTF, where the HTTP request message includes a KID. Correspondingly, the MBSTF receives the HTTP request message from the UE.

For example, the UE generates the key identifier KID by using AKMA/a GBA, and then includes the KID in the HTTP request message. The HTTP request message may be an application request (application request) message.

The HTTP request message further carries a user-agent information element, and the user-agent information element indicates a security capability exposure mechanism supported by the UE, including one or both of the AKMA and the GBA.

It may be understood that, if the UE uses the AKMA, the KID is an A-KID, and the user-agent information element includes a character string "3gpp-akma". If the UE uses the GBA, the KID is a B-KID. The user-agent information element includes one or more of character strings "3gpp-gba", "3gpp-gba-uicc", and "3gpp-gba-digest".

S402: The MBSTF sends a key obtaining request message to an AAnF/a BSF. Correspondingly, the AAnf/BSF receives the key obtaining request message from the MBSTF.

For example, after the MBSTF receives the HTTP request message from the UE, if the MBSTF has no activation context associated with the KID, the MBSTF selects the AAnF/BSF and sends the key request (Key get request) message to the AAnF/BSF, where the key request message carries the KID.

It may be understood that the MBSTF selects, based on the user-agent information element, to use an AKMA mechanism or a GBA mechanism. For example, if the user-agent information element carried in the key request message includes "3gpp-akma", and the MBSTF chooses to use the AKMA mechanism, the MBSTF selects the AAnF, and sends the key request message to the AAnF. If the user-agent information element carried in the key request message includes one or more of the character strings "3gpp-gba", "3gpp-gba-uicc", and "3gpp-gba-digest", and the MBSTF chooses to use the GBA mechanism, the MBSTF selects the BSF, and sends the key request message to the BSF.

S403: The AAnF/BSF sends a key obtaining response message to the MBSTF. Correspondingly, the AAnF/BSF receives the key obtaining response message from the MBSTF.

For example, the AAnF/BSF queries or generates a corresponding key AF key based on the KID, and then sends the AF key to the MBSTF by using the key obtaining response (Key get request) message. The key obtaining response message further includes a UE identifier (user id). It may be understood that, when the UE uses the AKMA, the UE identifier (user id) included by the AAnF in the key obtaining response message is a GPSI; or when the UE uses the GBA, the UE identifier (user id) included by the BSF in the key obtaining response message is an IMPI.

S404: The MBSTF sends an HTTP response message to the UE. Correspondingly, the UE receives the HTTP response message from the MBSTF. The HTTP response message may be an application answer (application answer) message.

For example, when security capability exposure mechanism negotiation fails, the MBSTF includes, in the HTTP response message, indication information indicating a negotiation failure. After the UE receives the HTTP response message from the MBSTF, if the HTTP response message carries the indication information indicating the negotiation failure, the UE determines that the security capability exposure mechanism negotiation fails. If the HTTP response message does not carry the indication information indicating the negotiation failure, and the UE successfully checks an FQDN, the UE determines that the security capability exposure mechanism negotiation succeeds.

S405: The UE sends an HTTP request message to the MBSTF, where the HTTP request message includes a multicast service identifier. Correspondingly, the MBSTF receives the HTTP request message from the UE.

For example, the UE initiates a service request to the MBSTF based on a parameter of a service announcement. Specifically, the UE sends the HTTP request message to the MBSTF, where the HTTP request message includes the multicast service identifier, for example, an MBS user service identifier (MBS user service IDs). The HPPT request message is used to register a multicast user service.

S406: The MBSTF sends an HTTP response message to the UE, where the HTTP response message includes a status code 401. Correspondingly, the UE receives the HTTP response message from the MBSTF.

For example, when authentication needs to be performed on the UE, the MBSTF sends the HTTP response message to the UE, where the HTTP response message carries the status code 401, and the status code 401 indicates that the UE is not authorized and authentication needs to be performed.

S407: The UE sends an HTTP request message to the MBSTF, where the HTTP request message includes the multicast service identifier, the KID, and psd. Correspondingly, the MBSTF receives the HTTP request message from the MBSTF.

For example, the UE sends the HTTP request to the MBSTF based on the status code 401, where the HTTP request message carries the multicast service identifier, for example, the MBS service identifier (MBS service ID), the key identifier KID used as a user name, and an authentication parameter generated based on an application key, for example, the psd.

S408: The MBSTF sends HTTP response information to the UE, where the HTTP response message includes a status code. Correspondingly, the UE receives the HTTP response information from the MBSTF.

For example, the MBSTF authenticates the UE based on the authentication parameter, and sends an HTTP response message to the UE based on an authentication result. Specifically, the HTTP response message may be HTTP authentication information (HTTP Authentication Info), and the HTTP response message includes a status code (status code).

It may be understood that, in the method 400, S401 to S404 may be considered as the security capability exposure parameter negotiation procedure between the UE and the MBSTF, and S405 to S408 may be considered as the user service registration procedure. The user service registration procedure may be performed after the security capability exposure parameter negotiation procedure, or may be performed in a cross manner. For example, S401 to S404 may be performed after S405 and S406. This is not limited in this application.

It may be understood that, the multicast service identifier and the PSD in S407 may alternatively be sent to the MBSTF together with the KID by using the message in 401, and in this case, S407 may not be performed. Correspondingly, the status code in 408 may be returned to the UE in the HTTP response message in 404, and in this case, S408 may not be performed.

The HTTP request message in S401 and the HTTP request message in S407 may be two separate messages, or may be combined into one message. This is not limited in this application.

FIG. 5A is a schematic flowchart of a method 500 according to an embodiment of this application. The following describes the method 500 by using an example with reference to steps in FIG. 5A.

S501: A network device determines first indication information, where the first indication information indicates at least one multicast key transmission procedure.

For example, each of the at least one multicast key transmission procedure is a communication procedure that is supported by a network side and that is used to transmit a multicast key to a terminal device, and the multicast key is a security transmission key of a multicast session between the terminal device and a multicast user plane function network element.

The at least one multicast key transmission procedure includes one or more of the following: a C procedure, a U1 procedure, and a U2 procedure.

It may be understood that, for the C procedure, the network side herein may be a multicast service transport function network element, a multicast service function network element, a multicast session management network element, a session management network element, or the like. For the U1 procedure, the network side herein may be a multicast service transport function network element, a multicast service function network element, an authentication and key management for applications anchor function (Authentication and Key Management for Applications anchor function, AAnf) network element, or the like. For the U2 procedure, the network side herein may be a multicast service transport function network element, a multicast service function network element, a bootstrapping server function (bootstrapping server function, BSF), or the like.

The network device may be any one of a multicast service function network element, an access network device, an application function network element, or a session management network element.

When the network device is a multicast service function network element, the multicast service function network element may determine the first indication information based on configuration information. The configuration information herein may be preconfigured on the multicast service function network element, or may be obtained by the multicast function network element from a network management device (for example, an operation administration and maintenance (operation administration and maintenance, OAM) system) or another network element. This is not limited in this application.

When the network device is an access network device, the access network device may determine the first indication information based on preconfigured information, or may receive the first indication information from the multicast service function network element. The access network device in this embodiment of this application may be any communication device that has a wireless transceiver function and that is configured to communicate with the terminal device, for example, an eNB or a gNB.

When the network device is an application function network element, the application function network element may receive the first indication information from the multicast service function network element.

When the network device is a session management network element, the session management network element may obtain the first indication information from a multicast session context. For example, the multicast service function network element sends the first indication information to the multicast session management network element in a process of creating a multicast session, and the multicast session management network element stores the first indication information in a multicast session context corresponding to the multicast session. The session management network element may obtain the multicast session context from the multicast session management network element, and obtain the first indication information from the multicast session context.

S502: The network device sends the first indication information to the terminal device. Correspondingly, the terminal device receives the first indication information from the network device.

For example, when the network device is a multicast service function network element, the multicast service function network element sends the first indication information to the terminal device by using a first message. In an implementation, the first message may be a service announcement message. The terminal device obtains the first indication information from the first message.

When the network device is an access network device, the access network device may send a second message to the terminal device, where the second message includes the first indication information. In an implementation, the second message may be a system message. The terminal device obtains the first indication information from the second message.

When the network device is an application function network element, the application function network element may send a third message to the terminal device, where the third message includes the first indication information. The terminal device obtains the first indication information from the third message.

When the network device is a session management network element, the session management network element may send a fourth message to the terminal device, where the fourth message includes the first indication information. In an implementation, the fourth message may be a multicast session join response message. For example, the terminal device requests to join a multicast session from the session management network element, and the session management network element obtains a multicast session context of the multicast session from the multicast session management network element based on the request of the terminal device, and obtains the first indication information from the multicast session context. Then, the session management network element sends the multicast session join response message to the terminal device, where the multicast session join response message includes the first indication information. The terminal device obtains the first indication information from the fourth message.

S503: The terminal device obtains service data from a core network based on a support case of the terminal device for the at least one multicast key transmission procedure.

For example, after obtaining the first indication information, the terminal device determines the support case of the terminal device for the at least one multicast key transmission procedure indicated by the first indication information, and then obtains the service data from the core network based on the support case. The support case of the terminal device for the at least one multicast key transmission procedure means whether the terminal device supports a multicast key transmission procedure in the at least one multicast key transmission procedure, or means a specific multicast key transmission procedure or specific multicast key transmission procedure, in the at least one multicast key transmission procedure, supported by the terminal device, or means whether there is an intersection between a multicast key transmission procedure supported by the terminal device and the at least one multicast key transmission procedure, and what is the intersection. For example, the support case may be any one of the following: The terminal device supports one or more of the at least one multicast key transmission procedure, or the terminal device does not support all of the at least one multicast key transmission procedure. For example, the at least one multicast key transmission procedure supported by the network side includes the C procedure and the U1 procedure. When the terminal device supports the C1 procedure and/or the U1 procedure, it may be considered that the terminal device supports one or more of the at least one multicast key transmission procedure. When the terminal device neither supports the C procedure nor the U1 procedure, it may be considered that the terminal device does not support all of the at least one multicast key transmission procedure.

The following provides an example for description with reference to different cases.

In a first implementation, the terminal device determines that the terminal device supports a target multicast key transmission procedure in the at least one multicast key transmission procedure. In this case, if the terminal device has not joined the multicast session, the terminal device requests to join the multicast session from the session management network element. In addition, the terminal device obtains the multicast key by using the target multicast key transmission procedure.

For example, if the terminal device determines that the terminal device supports a signaling-plane communication procedure in the at least one multicast key transmission procedure, that is, the target multicast key transmission procedure is a signaling-plane communication procedure between the session management network element and the terminal device, the terminal device obtains the multicast key from the multicast session join response message that is from the session management network element, where the session management network element herein is a core network element.

For another example, if the terminal device determines that the terminal device supports a user-plane communication procedure in the at least one multicast key transmission procedure, that is, the target multicast key transmission procedure is a user-plane communication procedure between the multicast service network element and the terminal device, the terminal device obtains the multicast key from a multimedia internet key management message that is from the multicast service network element.

After obtaining the multicast key, the terminal device obtains the service data from a first content delivery network element based on the multicast key. For example, the terminal device receives security-protected data from the multicast user plane function network element through the multicast session, and then performs security deprotection on the security-protected data by using the multicast key, to obtain the service data. The first content delivery network element herein is a core network element. The first content delivery network element may be, for example, the multicast user plane function network element.

It may be understood that after determining that establishment of the multicast session is completed, the terminal device may send third indication information to the application function network element, where the third indication information indicates that the multicast session is successfully established. The application function network element may determine, based on the third indication information, to send the service data to the terminal device through the multicast session, or in other words, the application function network element determines to send the service data to the terminal device through the first content delivery network element, or in other words, the application function network element determines not to send the service data to the terminal device through a unicast session. The unicast session is, for example, a protocol data unit session. In this case, when the application function network element needs to send the service data to the terminal device, the application function network element sends the service data to the multicast service network element. The multicast service network element performs security protection on the service data by using the multicast key, to obtain the security-protected data, and sends the security-protected data to the first content delivery network element. Then, the first content delivery network element sends the security-protected data to the terminal device through the multicast session, and the terminal device performs security deprotection on the security-protected data by using the multicast key, to obtain the service data.

In a second implementation, the terminal device determines that the terminal device does not support all of the at least one multicast key transmission procedure. In this case, if the terminal device has not joined the multicast session, the terminal device does not request to join the multicast session from the session management element. If the terminal device has joined the multicast session, the terminal device requests to leave the multicast session from the session management element. The terminal device determines not to obtain the service data through the multicast session.

Optionally, the terminal device may choose to receive the service data from a second content delivery network element through the unicast session. The unicast session may be a protocol data unit session established by the terminal device. The second content delivery network element herein is a core network element, for example, a user plane function network element.

It may be understood that after the terminal device determines that establishment of the unicast session is completed, the terminal device may send second indication information to the application function network element, where the second indication information indicates that the unicast session is successfully established. The application function network element may determine, based on the second indication information, to send the service data to the terminal device through the unicast session, or in other words, the application function network element determines to send the service data to the terminal device through the user plane function network element. In this case, when the application function network element needs to send the service data to the terminal device, the application function network element sends the service data to the second content delivery network element, and then the second content delivery network element sends the service data to the terminal device through the unicast session.

Based on the solution corresponding to FIG. 5A, in one aspect, the terminal device may obtain the service data from the core network based on the support case of the terminal device for the at least one multicast key transmission procedure supported by the network side. A session path for obtaining the service data from the core network is determined based on the support case. This avoids a case in which the terminal device cannot obtain the service data (or cannot perform security deprotection on the security-protected service data with the multicast key) because the terminal device cannot obtain the multicast key distributed by the network side, and can improve user experience. In another aspect, in the solution provided in this embodiment of this application, the terminal device autonomously determines the support case of the terminal device for the at least one multicast key transmission procedure supported by the network side, so that the network side does not need to determine or decide a specific multicast key transmission procedure to be used to distribute the multicast key to the terminal device, to reduce overheads of the network side.

The method 500 herein may correspond to the subsequent method 600, method 700, and method 800. The first indication information in the method 500 may correspond to indication information #1 in the methods 600 to 800. The terminal device in the method 500 may correspond to a UE in the methods 600 to 800. The network device in the method 500 may correspond to an MBSF in the method 600. In this case, S501 in the method 500 may correspond to S603 in the method 600, and S502 in the method 500 may correspond to S604 in the method 600. Alternatively, the network device in the method 500 may correspond to an AF in the method 600. In this case, S502 in the method 500 may correspond to S606 in the method 600. Alternatively, the network device in the method 500 may correspond to an MBSF in the method 700. In this case, S501 in the method 500 may correspond to S702 in the method 700. Alternatively, the network device in the method 500 may correspond to an SMF in the method 700. In this case, S502 in the method 500 may correspond to S712 in the method 700. Alternatively, the network device in the method 500 may correspond to a RAN in the method 800. In this case, S502 in the method 500 may correspond to S802 in the method 800. S503 in the method 500 may correspond to S610 to S627 in the method 600, or correspond to S714 to S730 in the method 700, or correspond to S807 to S824 in the method 800.

It may be understood that the method 500 corresponds to a method procedure of a first communication system. The first communication system includes at least a terminal device and a network device. The terminal device may perform a procedure corresponding to the method performed by the terminal device in the method 500, and the network device may perform a procedure corresponding to the method performed by the network device in the method 500.

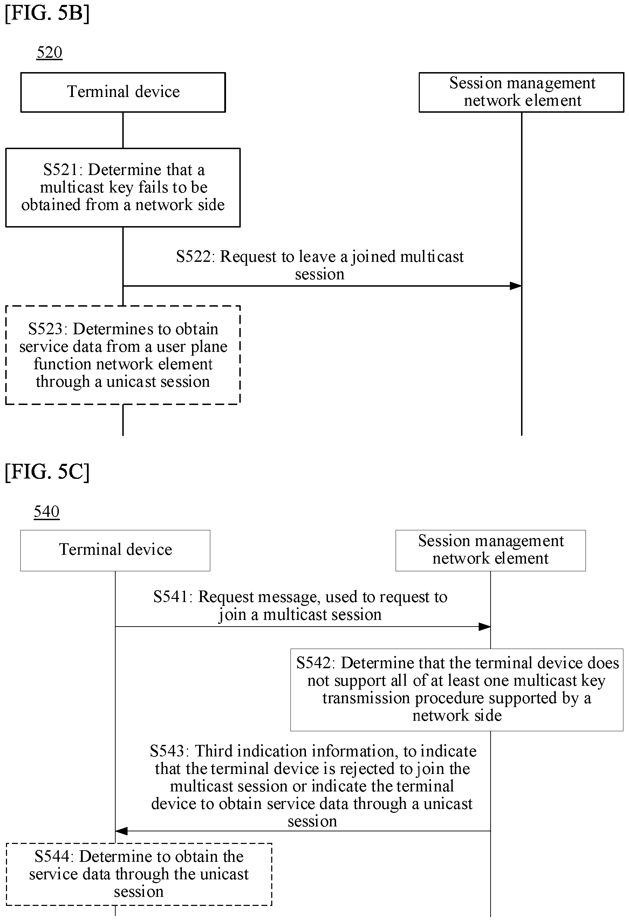

FIG. 5B is a schematic flowchart of a method 520 according to an embodiment of this application. The following describes the method 520 by using an example with reference to steps in FIG. 5B.

S521: A terminal device determines that a multicast key fails to be obtained from a network side.

For example, the multicast key is a security transmission key of a multicast session between the terminal device and a first content delivery network element. The following describes, with reference to an example, various cases in which the terminal device determines that the multicast key fails to be obtained.

For example, the terminal device determines that the multicast key fails to be obtained from the network side by using a first multicast key transmission procedure, where the first multicast key transmission procedure is a first communication procedure used by the network side to transmit the multicast key to the terminal device. In a possible implementation, the first multicast key transmission procedure is a C procedure. In this case, that the terminal device determines that the multicast key fails to be obtained from the network side by using a first multicast key transmission procedure includes: The terminal device determines that the multicast key fails to be obtained from the network side by using the C procedure. For example, the terminal device requests to join a multicast session from a session management network element; and the session management network element obtains, based on the request of the terminal device, a multicast session context corresponding to the multicast session from a multicast session management network element. Further, the session management network element sends a response message to the terminal device. It may be understood that if the multicast session context includes the multicast key, that is, the network side sends the multicast key to the terminal device by using the C procedure, the session management network element includes the multicast key in the response message sent to the terminal device. If the multicast session context does not include the multicast key, the response message does not carry the multicast key. Correspondingly, after receiving the response message from the session management network element, the terminal device determines whether the multicast key can be obtained from the response message. It may be understood that if the response message carries the multicast key and the terminal device supports the C procedure, the terminal device may obtain the multicast key from the response message. In this case, the terminal device determines that the multicast key is successfully obtained from the network side. If the response message does not carry the multicast key or the terminal device does not support the C procedure, the terminal device cannot obtain the multicast key from the response message. In this case, the terminal device determines that the multicast key fails to be obtained from the network side.

For example, when the terminal device determines that the multicast key fails to be obtained from the network side by using the first multicast key transmission procedure, the terminal device may attempt to obtain the multicast key from the network side by using a second multicast key transmission procedure. The second multicast key transmission procedure is a second communication procedure used by the network side to transmit the multicast key to the terminal device.

In a possible implementation (denoted as "Manner I"), the second multicast key transmission procedure is a U1 procedure or a U2 procedure. In this case, after the terminal device determines that the multicast key fails to be obtained from the network side by using the first multicast key transmission procedure, the terminal device initiates a security capability exposure mechanism negotiation procedure to the network side. If the security capability exposure mechanism negotiation fails, the terminal device determines, based on a result that the negotiation fails, that the multicast key fails to be obtained from the network side. If the security capability exposure mechanism negotiation succeeds, the terminal device may continue to perform a user service registration procedure, and obtain the multicast key from the network side by using U1. In this case, the terminal device determines that the multicast key is successfully obtained from the network side.

In another possible implementation (denoted as "Manner II"), the second multicast key transmission procedure is a U1 procedure. In this case, after the terminal device determines that the multicast key fails to be obtained from the network side by using the first multicast key transmission procedure, the terminal device initiates a user service registration procedure to a multicast service network element based on an authentication and key management for applications mechanism. If the user service registration procedure fails, the terminal device determines, based on a result that the user service registration procedure fails, that the multicast key fails to be obtained from the network side. If the user service registration procedure succeeds, the terminal device may obtain the multicast key by using the U1 procedure. In this case, the terminal device determines that the multicast key is successfully obtained from the network side.

Corresponding to Manner II, when the terminal device determines that the multicast key fails to be obtained from the network side by using the second multicast key transmission procedure, the terminal device may attempt to obtain the multicast key from the network side by using a third multicast key transmission procedure. The third multicast key transmission procedure is a third communication procedure used by the network side to transmit the multicast key to the terminal device.

In a possible implementation, the third multicast key transmission procedure is a U2 procedure. In this case, after the terminal device determines that the multicast key fails to be obtained from the network side by using the second multicast key transmission procedure, the terminal device initiates the user service registration procedure to the multicast service network element based on a generic bootstrapping architecture mechanism. If the user service registration procedure fails, the terminal device determines, based on a result that the user service registration procedure fails, that the multicast key fails to be obtained from the network side. If the user service registration procedure succeeds, the terminal device may obtain the multicast key by using the U2 procedure. In this case, the terminal device determines that the multicast key is successfully obtained from the network side.

It may be understood that the second multicast key transmission procedure and the third multicast key transmission procedure in Manner II may be exchanged. In other words, in another possible implementation, the second multicast key transmission procedure is the U2 procedure, and the third multicast key transmission procedure is a U3 procedure. A specific implementation is similar to the foregoing example, and details are not described herein again. It may be further understood that after separately determining that the multicast key fails to be obtained by using the first multicast key transmission procedure, the second multicast key transmission procedure, and the third multicast key transmission procedure, the terminal device may determine that the multicast key fails to be obtained from the network side.

S522: The terminal device requests to leave the joined multicast session from the session management network element.

For example, after determining that the multicast key fails to be obtained from the network side, the terminal device requests to leave the joined multicast session from the session management network element. For example, the terminal device sends a multicast session leave request message to the session management network element, where the multicast session leave request message includes an identifier of the multicast session that the terminal device has joined, and the multicast session leave request message is used to leave the multicast session.

Optionally, in S523, the terminal device determines to obtain the service data from a user plane function network element through a unicast session.

In conclusion, after the terminal device determines that the multicast key fails to be obtained from the network side, the terminal device leaves the joined multicast session, and determines to obtain the service data from the user plane function network element through the unicast session. In other words, after determining that the multicast key fails to be obtained from the network side, the terminal device determines not to receive the service data through the multicast session.

Based on the foregoing method 520, in one aspect, after determining that the multicast key fails to be obtained, the terminal device leaves the joined multicast session, and receives the service data through the unicast session in a subsequent procedure. This can avoid a case in which the terminal device cannot obtain the service data (or cannot perform security deprotection on security-protected service data with the multicast key) because the terminal device cannot obtain the multicast key distributed by the network side, and improves user experience. In another aspect, in the solution provided in this embodiment of this application, the network side does not need to determine or decide a specific multicast key transmission procedure to be used to distribute the multicast key to the terminal device, to reduce overheads of the network side.

The method 520 herein may correspond to the subsequent method 900. The terminal device in the method 520 may correspond to a UE in the method 900, the session management network element in the method 520 may correspond to an SMF in the method 900, S522 in the method 520 may correspond to S927 in the method 900, and S523 in the method 520 may correspond to S926 in the method 900.

It may be understood that the method 520 corresponds to a method procedure of a second communication system. The second communication system includes at least a terminal device and a session management network element. The terminal device may perform a procedure corresponding to the method performed by the terminal device in the method 520, and the session management network element may perform a procedure corresponding to the method performed by the session management network element in the method 520.

FIG. 5C is a schematic flowchart of a method 540 according to an embodiment of this application. The following describes the method 540 by using an example with reference to steps in FIG. 5C.

S541: A terminal device sends a request message to a session management network element, where the request message is used to request to join a multicast session between the terminal device and a multicast user plane function network element.

S542: The session management network element determines that the terminal device does not support all of at least one multicast key transmission procedure supported by a network side.

For example, after receiving the request message from the terminal device, the session management network element determines whether the terminal device supports all of the at least one multicast key transmission procedure supported by the network side. For example, the terminal device includes, in the request message in S541, indication information indicating at least one multicast key transmission procedure supported by the terminal device, and the session management network element determines, based on the indication information, whether the terminal device supports at least one multicast key transmission procedure in the multicast key transmission procedure supported by the network side, or in other words, the session management network element determines, based on the indication information, whether the network side supports at least one multicast key transmission procedure in the multicast key transmission procedure supported by the terminal device, or in other words, the session management network element determines, based on the indication information, a support case of the terminal device for the multicast key transmission procedure supported by the network side, or in other words, the session management network element determines, based on the indication information, whether the multicast key transmission procedure supported by the terminal device matches the multicast key transmission procedure supported by the network side.

It may be understood that the session management network element may determine, from a multicast session context corresponding to the multicast session, the at least one multicast key transmission procedure supported by the network side. A specific manner is not limited in this application.

S543: The session management network element sends third indication information to the terminal device, where the third indication information indicates that the session management network element rejects the terminal device to join the multicast session or indicates the terminal device to obtain service data through a unicast session.

For example, when the session management network element determines that the terminal device does not support all of the at least one multicast key transmission procedure, the session management network element sends the third indication information to the terminal device, to reject the terminal device to join the multicast session, or indicate the terminal device to obtain the service data through the unicast session.

Optionally, in S544, the terminal device determines to obtain the service data through the unicast session.

For example, the terminal device receives the third indication information from the session management network element, and determines, based on the third indication information, that the terminal device fails to join the multicast session, or the terminal device determines, based on the third indication information, not to obtain the service data through the multicast session. Optionally, the terminal device determines, based on the third indication information, to obtain the service data through the unicast session.

Based on the foregoing method 540, when determining that the terminal device does not support all of the at least one multicast key transmission procedure, the session management network element may reject the terminal device to join the multicast session, so that the terminal device can subsequently receive the service data through the unicast session. This can avoid a case in which the terminal device cannot obtain the service data (or cannot perform security deprotection on security-protected service data with a multicast key) because the terminal device cannot obtain the multicast key distributed by the network side, and improve user experience.

The method 540 herein may correspond to the subsequent method 1000. The terminal device in the method 540 may correspond to a UE in the method 1000, the session management network element in the method 540 may correspond to an SMF in the method 1000, S541 in the method 540 may correspond to S1009 in the method 1000, the third indication information in the method 500 may correspond to indication information #7 in the method 1000, and S544 in the method 500 may correspond to S1025 in the method 100.

It may be understood that the method 540 corresponds to a method procedure of a third communication system. The third communication system includes at least a terminal device and a session management network element. The terminal device may perform a procedure corresponding to the method performed by the terminal device in the method 540, and the session management network element may perform a procedure corresponding to the method performed by the session management network element in the method 540.

The following describes, based on a 5G system, in detail a communication method provided in embodiments of this application. The subsequent method 600 to method 1000 may be used in the network architecture shown in FIG. 1 or FIG. 2. In an implementation, the MBSF in the method 600 to the method 1000 may correspond to the multicast service function network element in the method 500, the MBSTF in the method 600 to the method 1000 may correspond to the multicast service network element in the method 500, the AF in the method 600 to the method 1000 may correspond to the application function network element in the method 500, the MB-SMF in the method 600 to the method 1000 may correspond to the multicast session management network element in the method 500, the SMF in the method 600 to the method 1000 may correspond to the session management network element in the method 500, the UE in the method 600 to the method 1000 may correspond to the terminal device in the method 500, and the indication information #1 in the method 600 to the method 1000 may correspond to the first indication information in the method 500.

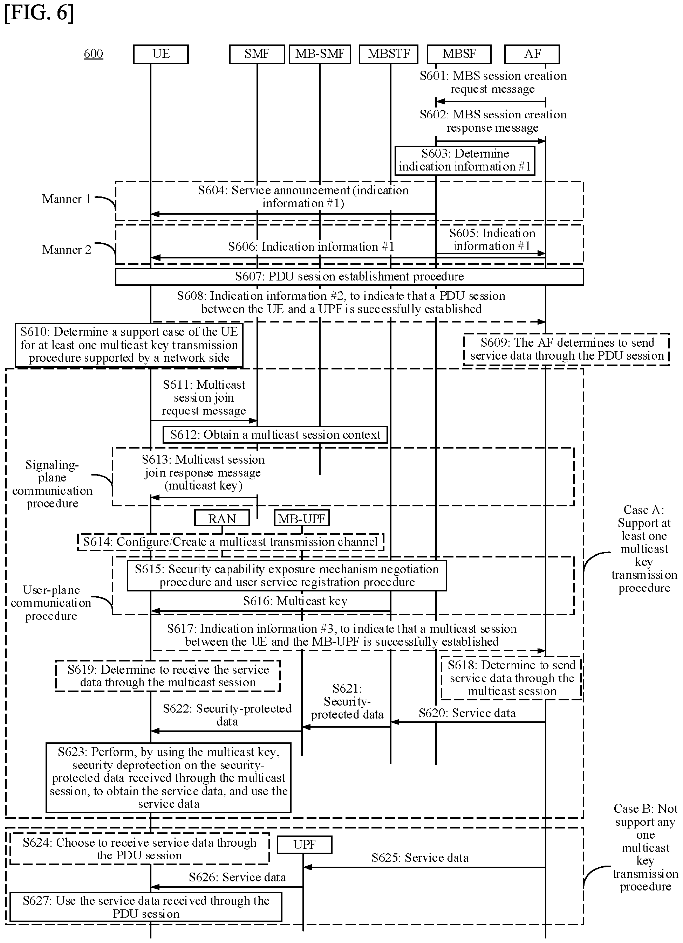

FIG. 6 is a schematic flowchart of a method 600 according to an embodiment of this application. The following describes the method 600 by using an example with reference to steps.

S601: An AF sends an MBS session creation request message to an MBSF. Correspondingly, the MBSF receives the MBS session creation request message from the AF.

S602: The MBSF sends an MBS session creation response message to the AF. Correspondingly, the AF receives the MBS session creation response message from the MBSF.

It should be understood that S601 and S602 are similar to S301 and S306 in the method 300, and steps corresponding to S302 to S305 in the method 300 are omitted in the method 600. For brevity, details are not described herein again.

S603: The MBSF determines indication information #1.

For example, the indication information #1 indicates at least one multicast key transmission procedure supported by a network side, or the indication information #1 indicates at least one multicast key transmission procedure required by the network side, or the indication information #1 indicates at least one multicast key transmission procedure corresponding to the network side. For convenience, the first case is used as an example for description in subsequent embodiments. The indication information #1 may alternatively have another name. For example, the indication information #1 may also be referred to as a security setting parameter, a security parameter, capability information, or the like. This is not limited in this application.

It may be understood that an application scope or a granularity of the indication information #1 is not limited in this embodiment of this application. For example, the indication information #1 is applicable to an entire PLMN or may be at a PLMN granularity, that is, the MBSF uses/sends same indication information #1 for all UEs in a same PLMN. For example, the indication information #1 is applicable to an entire user service or may be at a user service granularity, that is, the MBSF uses/sends same indication information #1 for all UEs corresponding to a same user service. For example, the indication information #1 is applicable to a multicast session, or may be at a multicast session granularity, that is, the MBSF uses/sends same indication information #1 for all UEs associated with a same multicast session.

The at least one multicast key transmission procedure supported by the network side includes one or more of the following: a C procedure, a U1 procedure, and a U2 procedure.

In an implementation, the MBSF determines the indication information #1 based on configuration information. The MBSF may obtain the configuration information by using preconfigured information, or the MBSF obtains core network configuration information through OAM or another network element. This is not limited in this application.

Optionally, the MBSF may obtain security policy information from the AF (for example, obtain the security policy information from the MBS session creation response message in S602), where the security policy information indicates whether security protection needs to be performed on the multicast session. When the security policy information indicates that security protection needs to be performed on the multicast session, the MBSF determines the indication information #1. When the security policy information indicates that security protection does not need to be performed on the multicast session, the MBSF may not specify S603.

With reference to different examples, the following describes several implementations in which the multicast key transmission procedure supported by the network side is indicated by the indication information #1.

In an implementation (denoted as Solution 1), a value of the indication information #1 may indicate the multicast key transmission procedure supported by the network side. For example, Table 1 shows a possible value manner of the indication information #1.

**Table 1**

| Value of indication information #1 | Meaning |
|---|---|
| Control-plane procedure | A network side supports transmitting a multicast key by using a signaling-plane communication procedure (that is, a C procedure) |
| User-plane procedure | The network side supports transmitting the multicast key by using a user-plane communication procedure (that is, a U1 procedure or a U2 procedure) |
| AKMA-based user-plane procedure | The network side supports transmitting the multicast key by using an AKMA-based user-plane communication procedure (that is, the U1 procedure) |
| GBA-based user-plane procedure | The network side supports transmitting the multicast key by using a GBA-based user-plane communication procedure (that is, the U2 procedure) |
| Control-plane procedure and AKMA-based user-plane procedure | The network side supports transmitting the multicast key by using the signaling-plane communication procedure (that is, the C procedure) and also supports transmitting the multicast key by using the AKMA-based user-plane communication procedure (the U1 procedure) |
| Control-plane procedure and GBA-based user-plane procedure | The network side supports transmitting the multicast key by using the signaling-plane communication procedure (the C procedure) and also supports transmitting the multicast key by using the GBA-based user-plane communication procedure (that is, the U2 procedure) |
| AKMA-based user-plane procedure and GBA-based user-plane procedure | The network side supports transmitting the multicast key by using the AKMA-based user-plane communication procedure (that is, the U1 procedure) and also supports transmitting the multicast key by using the GBA-based user-plane communication procedure (that is, the U2 procedure) |
| Control-plane procedure, AKMA-based user-plane procedure and GBA-based user-plane procedure | The network side supports transmitting the multicast key by using the signaling-plane communication procedure (that is, the C procedure), supports transmitting the multicast key by using the AKMA-based user-plane communication procedure (that is, the U1 procedure), and also supports transmitting the multicast key by using the GBA-based user-plane communication procedure (that is, the U2 procedure) |

It may be understood that the value of the indication information #1 may be any row in Table 1.

In another implementation (denoted as Solution 2), the indication information #1 includes a plurality of different fields, and values of the different fields indicate the multicast key transmission procedure supported by the network side. For example, Table 2 shows a setting and value manner of a field in the indication information #1.

**Table 2**

| | Field | Value | Meaning |
|---|---|---|---|
| Indication information #1 | Control-plane procedure required | Yes | A network side supports transmitting a multicast key by using a signaling-plane communication procedure (that is, a C procedure) |
| | | No | The network side does not support transmitting the multicast key by using the signaling-plane communication procedure (that is, the C procedure) |
| | AKMA required | Yes | The network side supports transmitting the multicast key by using an AKMA-based user-plane communication procedure (that is, a U1 procedure) |
| | | No | The network side does not support transmitting the multicast key by using the AKMA-based user-plane communication procedure (that is, the U1 procedure) |
| | GBA required | Yes | The network side supports transmitting the multicast key by using a GBA-based user-plane communication procedure (that is, a U2 procedure) |
| | | No | The network side does not support transmitting the multicast key by using the GBA-based user-plane communication procedure (that is, the U2 procedure) |

It may be understood that the indication information #1 may include one or more of the three fields in Table 2.

In still another implementation (denoted as Solution 3), the indication information #1 includes a key distribution element (key distribution element), and optionally further includes a security capability exposure parameter (security capability exposure parameter). The key distribution element indicates the multicast key transmission procedure (including the signaling-plane communication procedure and the user-plane communication procedure) supported by the network side, and the security capability exposure parameter indicates a security capability exposure mechanism (including an AKMA mechanism and a GBA mechanism) supported by the network side. For example, Table 3 shows a setting and value manner of an element in the indication information #1.

**Table 3**

| | Element information | Value | Meaning |
|---|---|---|---|
| Indication information #1 | Key distribution element | Control-plane procedure | A network side supports transmitting a multicast key only by using a signaling-plane communication procedure (that is, a C procedure) |
| | | User-plane procedure | The network side supports transmitting the multicast key only by using a user-plane communication procedure (that is, a U1 procedure or a U2 procedure) |
| | | Control-plane procedure and user-plane procedure | The network side supports transmitting the multicast key by using the signaling-plane communication procedure (that is, the C procedure) and also supports transmitting the multicast key by using the user-plane communication procedure (that is, the U1 procedure or the U2 procedure) |
| | Security capability exposure parameter | AKMA | The network side supports transmitting the multicast key by using an AKMA-based user-plane communication procedure (that is, the U1 procedure) |
| | | GBA | The network side supports transmitting the multicast key by using a GBA-based user-plane communication procedure (that is, the U1 procedure) |
| | | AKMA and GBA | The network side supports transmitting the multicast key by using the AKMA-based user-plane communication procedure (that is, the U1 procedure) and also supports transmitting the multicast key by using the GBA-based user-plane communication procedure (that is, the U1 procedure) |

It may be understood that the indication information #1 may include the "key distribution element" in Table 3, and a value of the "key distribution element" may be any one of three fields corresponding to the "key distribution element" in Table 3. If the value of the "key distribution element" is "user-plane procedure" or "control-plane procedure and user-plane procedure", the indication information #1 further includes "security capability exposure parameter", and a value of "security capability exposure parameter" may be any one of the three fields corresponding to the "security capability exposure parameter" in Table 3.

It should be understood that S603 may be performed after S601, or may be performed after S602. This is not limited in this application.

Further, the MBSF sends the indication information #1 to the UE. The following provides an example for description with reference to Solution A and Solution B below.

### Solution A:

S604: The MBSF sends a service announcement (Service Announcement) message to the UE, where the service announcement message includes the indication information #1. Correspondingly, the UE receives the service announcement message from the MBSF, and obtains the indication information #1 from the service announcement message.

It may be understood that the indication information #1 may be a part of an existing information element in the service announcement message. For example, the indication information #1 may be used as a part of a security description information element or a service protection description information element in the service announcement message. In other words, the MBSF may include the indication information #1 in the existing information element in the service announcement message, and send the service announcement message to the UE, or may include the indication information #1 in a new information element independent of the existing information element in the service announcement message, and send the service announcement message to the UE. This is not limited in this application. An example of the service announcement message is as follows:

| |
|---|
| HTTP/2 200 OK |
| Server: xxx/1.6.3 |
| content-type: application/xml |
| content-length: xx |
| <?xml version="1.0" encoding="UTF-8"?> |
| <securityDescription |
| xmlns="urn:3GPP:metadata:2005:MBMS:securityDescription" |
| xmlns:xsi=http://www.w3.org/2001/XMLSchema-instance |
| xsi:schemaLocation="um:3GPP:metadata:2005:MBMS:securityDescription |
| security.xsd"> |
| <keyManagement |
| offsetTime="5" |
| randomTimePeriod="10" |
| uiccKeyManagement="true" |
| Control-planekeymanagement="true"> <!--indicates that the network side supports |
| transmitting the multicast key by using the C procedure--> |
| ... |
| </securityDescription><!--security description information element--> |

The foregoing example is described by using an example in which the MBSF sends the indication information #1 to the UE by using the service announcement message. However, it may be understood that the MBSF may alternatively send the indication information #1 to the UE by using another message or procedure. This is not limited in this application.

### Solution B:

S605: The MBSF sends the indication information #1 to the AF. Correspondingly, the AF receives the indication information #1 from the MBSF.

S606: The AF sends the indication information #1 to the UE. Correspondingly, the UE receives the indication information #1 from the AF.

It may be understood that the foregoing example in which the MBSF sends the indication information #1 to the AF, and then the AF sends the indication information #1 to the UE is described. However, it should be understood that the MBSF may alternatively send the indication information #1 to another network element, and then the another network element sends the indication information #1 to the UE. For example, the MBSF may send the indication information #1 to a UDM, and then the UDM sends the indication information #1 to the UE by using a UE configuration update procedure (UE Configuration Update procedure).

It may be understood that if the security policy information obtained by the MBSF from the AF indicates that security protection does not need to be performed on the MBS session, the MBSF may not determine the indication information #1, that is, does not perform S603. In this case, the MBSF may indicate, to the UE, that security protection does not need to be performed on the MBS session.

S607: The UE performs a PDU session establishment procedure through the network side. A specific process is not limited in this application.

Optionally, in S608, the UE sends indication information #2 to the AF, where the indication information #2 indicates that a PDU session between the UE and a UPF is successfully established. Correspondingly, the AF receives the indication information #2 from the UE.

For example, after determining that the PDU session is successfully established, the UE sends the indication information #2 to the AF, to indicate that the PDU session between the UE and the UPF is successfully established.

Optionally, in S609, the AF determines to send service data through the PDU session.

For example, after receiving the indication information #2 from the UE, the AF determines, based on the indication information #2, to send the service data to the UE through the PDU session. In other words, the AF determines to deliver the service data to the UE through the UPF. The UPF is a UPF that provides a service for the UE in the PDU session.

It may be understood that S607 to S609 may be performed before S611, or may be performed after S611. This is not limited in this application.

S610: The UE determines the support case of the UE for the at least one multicast key transmission procedure supported by the network side. For example, after receiving the indication information #1, the UE determines, based on the indication information #1, the at least one multicast key transmission procedure supported by the network side, and then the UE determines the support case of the UE for the at least one multicast key transmission procedure, or in other words, the UE determines whether the UE supports at least one of the at least one multicast key transmission procedure, or in other words, the UE determines whether the multicast key transmission procedure supported by the UE matches the at least one multicast key transmission procedure, or in other words, the UE determines whether one or more of the at least one multicast key transmission procedure required by the network side is met.

The support case of the UE for the at least one multicast key transmission procedure includes any one of the following: The UE supports one or more of the at least one multicast key transmission procedure, and the UE does not support all of the at least one multicast key transmission procedure. For example, the at least one multicast key transmission procedure supported by the network side includes the C1 procedure and the U1 procedure. When the UE supports the C1 procedure or the UE supports the U1 procedure, the UE determines that the UE supports one or more of the at least one multicast key transmission procedure. When the UE neither supports the C1 procedure nor the U1 procedure, the UE determines that the UE does not support all of the at least one multicast key transmission procedure.

In this way, the UE may select, based on the support case, a session used to obtain the service data.

For example, when the UE supports one or more of the at least one multicast key transmission procedure, or when the UE meets one or more of the at least one multicast key transmission procedure, the UE performs a procedure corresponding to Case A in FIG. 6, to determine to obtain the service data through the multicast session. When the UE does not support all of the at least one multicast key transmission procedure, or when the UE does not meet all of the at least one multicast key transmission procedure, the UE performs a procedure corresponding to Case B in FIG. 6, to determine to obtain the service data through the PDU session. The following separately describes Case A and Case B by using examples.

### Case A:

S611: The UE sends a multicast session join request message to an MB-SMF, where the multicast session join request message is used to request to join the multicast session. Correspondingly, the MB-SMF receives the multicast session join request message from the UE.

It should be understood that S611 is similar to S309 in the method 300, and details are not described herein again.

S612: The SMF obtains a multicast session context through the MB-SMF.

S612 is similar to S310 in the method 300, and details are not described herein again. It may be understood that, if the MBSF selects the signaling-plane communication procedure (control-plane procedure) to send the multicast key to the UE, the MBSF may send the multicast key to the MB-SMF after S601. After receiving the multicast key, the MB-SMF stores the multicast key in the MBS session context. In other words, if the MBSF selects the signaling-plane communication procedure to send the multicast key to the UE, the multicast session context obtained by the SMF includes the multicast key.

S613: The SMF sends a multicast session join response message to the UE. Correspondingly, the UE receives the multicast session join response message from the SMF.

For example, if the SMF obtains the multicast key from the multicast session context in S612, the SMF includes the multicast key in the multicast session join response message.

If the UE determines, in S610, that the UE supports the C1 procedure in the at least one multicast key transmission procedure supported by the network side, the terminal device obtains the multicast key by using the C1 procedure. Specifically, the UE receives the multicast session join response message from the SMF, and then obtains the multicast key from the multicast session join response message.

Optionally, in the signaling-plane communication procedure, in S614, the UE configures/creates/joins a multicast transmission channel through a RAN and an MB-UPF. The multicast transmission channel includes a transmission channel between the UE and the RAN and a transmission channel between the RAN and the MB-UPF. A specific process is not limited in this application. It may be understood that the service data in the multicast session is transmitted through the transmission channel. When the RAN does not support a multicast service, a 5GC individual data sending manner is used between the RAN and the MB-UPF, that is, a transmission channel between the RAN and the UPF and a transmission channel between the UPF and the MB-UPF are configured. When the RAN supports a multicast service, a 5GC shared data sending manner is used between the RAN and the MB-UPF, and the transmission channel between the RAN and the MB-UPF is configured in a session creation process in 601 and 602.

It should be understood that, after the multicast transmission channel is configured, the UE may receive the service data from the MB-UPF through the multicast transmission channel.

If the UE determines, in S610, that the UE supports the U1 procedure or the U2 procedure in the at least one multicast key transmission procedure supported by the network side, the UE obtains the multicast key by using the U1 procedure or the U2 procedure. Specifically, in S615, the UE performs a security capability exposure mechanism negotiation procedure and a user service registration procedure through the MBSTF. For a detailed process, refer to the method 400. Details are not described herein again. Then, in S616, the UE receives the multicast key from the MBSTF. For example, the UE obtains the multicast key from a MIKEY message from the MBSTF.

Optionally, in S617, the UE sends indication information #3 to the AF, where the indication information #3 indicates that a multicast session between the UE and the MB-UPF is successfully established.

For example, after determining that the multicast session is successfully established, the UE sends the indication information #3 to the AF, where the indication information #3 indicates that the multicast session between the UE and the MB-UPF is successfully established.

Optionally, in S618, the AF determines to send the service data through the multicast session.

For example, after receiving the indication information #3 from the UE, the AF determines, based on the indication information #3, to send the service data to the UE through the multicast session, that is, the AF determines to deliver the service data to the UE through the MB-UPF. The MB-UPF is an MB-UPF that provides a service for the UE in the multicast session.

If the AF performs S609 before S618, S618 may also be described as follows: The AF determines not to send the service data to the UE through the PDU session.

Optionally, in S619, the UE determines to receive the service data through the multicast session.

For example, after determining that the multicast session is successfully established, the UE determines to receive the service data through the multicast session.

Based on the foregoing solution, the UE may obtain the multicast key from the network side. The following describes a multicast communication process by using an example with reference to S619 to S622.

S620: The AF sends the service data to the MBSTF. Correspondingly, the MBSTF receives the service data from the AF.

For example, when the AF needs to send the service data to the UE, the AF sends the service data to the MBSTF based on S618.

S621: The MBSTF sends security-protected data to the MB-UPF. Correspondingly, the MB-UPF receives the security-protected data from the MBSTF.

For example, after receiving the service data from the AF, the MBSTF encrypts the service data by using the multicast key, to obtain the security-protected data, and then the MBSTF sends the security-protected data to the MB-UPF.

S622: The MB-UPF sends the security-protected data to the UE. Correspondingly, the UE receives the security-protected data from the MB-UPF.

S623: The UE performs, by using the multicast key, security deprotection on the security-protected data received through the multicast session, to obtain the service data, and uses the service data.

### Case B:

Optionally, in S624, the UE chooses to receive the service data through the PDU session.

For example, when the UE determines that the UE does not support all of the at least one multicast key transmission procedure supported by the network side, the UE does not join the multicast session, and chooses to receive the service data through the PDU session. In other words, the UE chooses not to receive the service data through the multicast session. If the UE has joined the multicast session, the UE triggers a multicast session leave procedure. For example, the UE sends a multicast session leave request message to the SMF, to request to leave the joined multicast session.

Optionally, if the UE does not perform S608, the UE may send indication information #4 to the AF after S624. The indication information #4 indicates that the UE is to obtain the service data through the PDU session, or indicates the AF to trigger the UPF to transmit the service data to the UE through the PDU session.

S625: The AF sends the service data to the UPF. Correspondingly, the UPF receives the service data from the AF.

For example, when the AF needs to send the service data to the UE, the AF sends the service data to the UPF based on S609.

S626: The UPF sends the service data to the UE. Correspondingly, the UE receives the service data from the UPF.

S627: The UE uses the service data received through the PDU session.

In conclusion, in Case A, the UE requests to join the multicast session in S611 only when the UE obtains the indication information #1 in S604 or S606, and determines, in S610, that the one or more of the at least one multicast key transmission procedure indicated by the indication information #1 is supported. In other words, the UE determines to obtain the service data from the MB-UPF through the multicast session. Optionally, in this case, the UE may send the indication information #3 to the AF in S617, so that the AF can determine in time to send the service data to the UE through the multicast session.

In Case B, when the UE obtains the indication information #1 in S604 or S606, and determines, in S610, that all of the at least one multicast key transmission procedure indicated by the indication information #1 is not supported, the UE does not request to join the multicast session. In other words, the UE determines to obtain the service data from the UPF through the PDU session. Optionally, in this case, if the UE has not sent the indication information #2 to the AF (for example, S608), the UE sends the indication information to the AF, so that the AF can determine in time to send the service data to the UE through the PDU session.

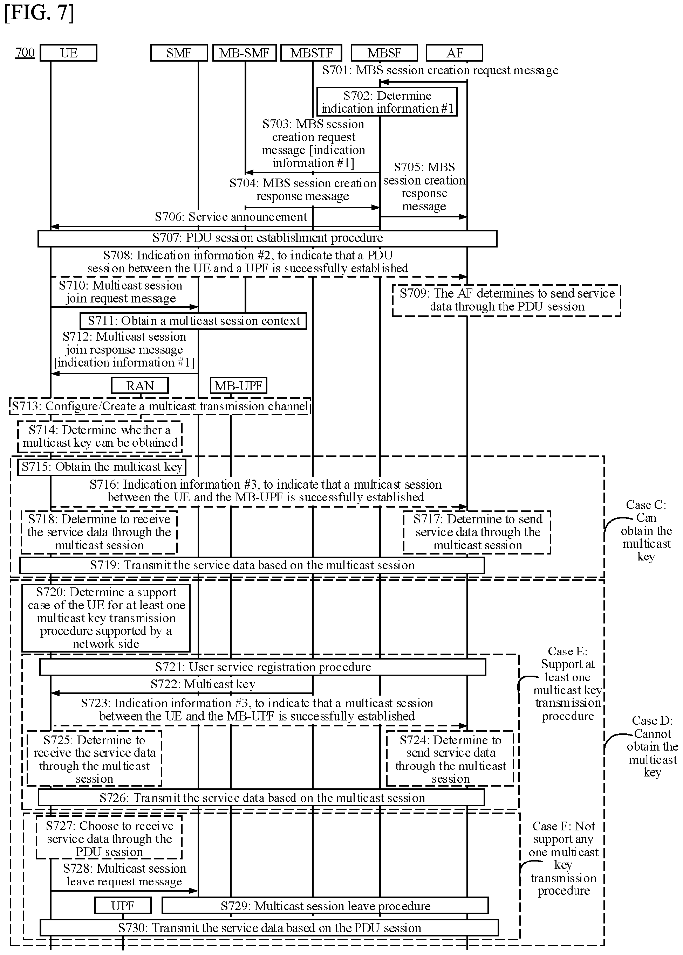

FIG. 7 is a schematic flowchart of a method 700 according to an embodiment of this application. The following describes the method 700 by using an example with reference to steps.

S701: An AF sends an MBS session creation request message to an MBSF. Correspondingly, the MBSF receives the MBS session creation request message from the AF.

It should be understood that S701 is similar to S301 in the method 300. For brevity, details are not described herein again.

S702: The MBSF determines indication information #1. For a specific implementation, refer to S603 in the method 600. Details are not described herein again.

S703: The MBSF sends an MBS session creation request message to an MB-SMF. Correspondingly, the MB-SMF receives the session creation request message from the MBSF.

It may be understood that, if the MBSF supports only a signaling-plane communication procedure, the MBSF includes a multicast key in the MBS session creation request message, and in this case, the MBSF may not perform S703. If the MBSF does not support a signaling-plane communication procedure but supports a user-plane communication procedure, the MBSF includes the indication information #1 in the MBS session creation request message. If the MBSF supports both a signaling-plane communication procedure and a user-plane communication procedure, the MBSF may include a multicast key and the indication information #1 in the MBS session creation request message.

Correspondingly, after receiving the MBS session creation request message from the MBSF, the MB-SMF stores the information (the multicast key and/or the indication information #1) carried in the MBS session creation request message into a multicast session context.

In the user-plane communication procedure. In S704, the MB-SMF sends an MBS session creation response message to the MBSF. Correspondingly, the MBSF receives the MBS session creation response message from the MB-SMF.

S705: The MBSF sends an MBS session creation response message to the AF. Correspondingly, the AF receives the MBS session creation response message from the MBSF.

S706: The MBSF sends a service announcement message to a UE. Correspondingly, the UE receives the service announcement message from the MBSF.

It should be understood that S704 to S706 are similar to S303, S306, and S307 in the method 300. For brevity, details are not described herein again.

S707: The UE performs a PDU session establishment procedure through a network side. A specific process is not limited in this application.

Optionally, in S708, the UE sends indication information #2 to the AF, where the indication information #2 indicates that a PDU session between the UE and a UPF is successfully established. Correspondingly, the AF receives the indication information #2 from the UE. A specific process is similar to S608 in the method 600, and details are not described herein again.

Optionally, in S709, the AF determines to send service data through the PDU session. A specific process is similar to S609 in the method 600, and details are not described herein again.

S710: The UE sends a multicast session join request message to an SMF. Correspondingly, the SMF receives the multicast session join request message from the UE.

S711: The SMF obtains a multicast session context.

S710 and S711 are similar to S611 and S612 in the method 600, and details are not described herein again. It may be understood that the multicast session context obtained by the SMF in S711 includes the information sent by the MBSF to the MB-SMF in S703, that is, the multicast key and/or the indication information #1.

S712: The SMF sends a multicast session join response message to the UE. Correspondingly, the UE receives the multicast session join response message from the SMF.

For example, the multicast session join response message includes the multicast key and/or the indication information #1 obtained by the SMF from the multicast session context.

Optionally, in S713, the UE configures/creates a multicast transmission channel through a RAN and an MB-UPF. For specific descriptions, refer to S614 in the method 600. Details are not described herein again.

S714: The UE determines whether the multicast key can be obtained.

For example, after receiving the multicast session join response message from the SMF, the UE determines whether the multicast key can be obtained from the multicast session join response message.

When the multicast session join response message carries the multicast key (that is, the network side supports the signaling-plane communication procedure), and the UE supports the signaling-plane communication procedure, the UE may obtain the multicast key from the multicast session join response message. In this case, the UE performs a procedure corresponding to Case C in FIG. 7. When the multicast session join response message does not carry the multicast key (that is, the network side does not support the signaling-plane communication procedure) or the UE does not support the signaling-plane communication procedure, the UE cannot obtain the multicast key from the multicast session join response message. In this case, the UE performs a procedure corresponding to Case D in FIG. 7. The following separately describes Case A and Case B by using examples.

### Case C:

S715: The UE obtains the multicast key. That is, the UE obtains the multicast key from the multicast session join response message.

It may be understood that in this case, if the multicast session join response message carries the indication information #1, the UE may ignore the indication information #1.

Optionally, in S716, the UE sends indication information #3 to the AF, where the indication information #3 indicates that a multicast session between the UE and the MB-UPF is successfully established.

Optionally, in S717, the AF determines to send the service data through the multicast session.

Optionally, in S718, the UE determines to receive the service data through the multicast session.

S719: Transmit the service data between the UE and the AF based on the multicast session.

It should be understood that S716 to S718 are similar to S617 to S619 in the method 600, and S719 may correspond to S620 to S623 in the method 600. For brevity, details are not described herein again.

### Case D:

S720: The UE determines a support case of the UE for at least one multicast key transmission procedure supported by the network side.

For example, the UE determines, based on the indication information #1, the at least one multicast key transmission procedure supported by the network side, and then the UE determines the support case of the UE for the at least one multicast key transmission procedure, or in other words, the UE determines whether the UE supports one or more of the at least one multicast key transmission procedure, or in other words, the UE determines whether a multicast key transmission procedure supported by the UE matches the at least one multicast key transmission procedure.

When the UE supports one or more of the at least one multicast key transmission procedure, the UE performs a procedure corresponding to Case E in FIG. 7. When the UE does not support all of the at least one multicast key transmission procedure, the UE performs a procedure corresponding to Case F in FIG. 7. The following separately describes Case E and Case F by using examples.

### Case E:

S721: The UE initiates a user service registration procedure. For a specific process, refer to S405 to S408 in the method 400. Details are not described herein again.

S722: An MBSTF sends the multicast key to the UE.

S723: The UE sends indication information #3 to the AF, where the indication information #3 indicates that a multicast session between the UE and the MB-UPF is successfully established.

Optionally, in S724, the AF determines to send the service data through the multicast session.

Optionally, in S725, the UE determines to receive the service data through the multicast session.

S726: Transmit the service data between the UE and the AF based on the multicast session.

It should be understood that S722 to S725 are similar to S616 to S619 in the method 600, and S726 may correspond to S620 to S623 in the method 600. For brevity, details are not described herein again.

### Case F:

Optionally, in S727, the UE chooses to receive the service data through the PDU session. A specific process is similar to S624 in the method 600, and details are not described herein again.

S728: The UE sends a multicast session leave request message to the SMF, where the multicast session leave request message is used to request to leave the multicast session that the UE has joined. Correspondingly, the SMF receives the multicast session leave request message from the UE. Then, in S729, a multicast session leave procedure is performed. A specific process is not limited in this application.

S730: Transmit the service data between the UE and the AF based on the PDU session.

It should be understood that S730 may correspond to S625 to S627 in the method 600. For brevity, details are not described herein again.

In conclusion, in Case C, if the UE can obtain the multicast key from the multicast session join response message in S712, the UE may obtain the service data from the MB-UPF based on the multicast key through the multicast session. Optionally, in this case, the UE may send the indication information #3 to the AF in S716, so that the AF can determine in time to send the service data to the UE through the multicast session.

In Case D, when the UE does not obtain the multicast key from the multicast session join response message in S712 but obtains the indication information #1, the UE determines, in S720, the support case of the UE for the at least one multicast key transmission procedure indicated by the indication information #1. When the UE determines that the UE supports the one or more of the at least one multicast key transmission procedure (corresponding to Case E), the UE determines to obtain the service data from the MB-UPF through the multicast session. Optionally, in this case, the UE may send the indication information #3 to the AF in S723, so that the AF can determine in time to send the service data to the UE through the multicast session. When the UE determines that the UE does not support all of the at least one multicast key transmission procedure (corresponding to Case F), the UE requests to leave the joined multicast session in S728, that is, the UE determines to obtain the service data from the UPF through the PDU session. Optionally, in this case, if the UE has not sent the indication information #2 to the AF (for example, S708), the UE sends the indication information to the AF, so that the AF can determine in time to send the service data to the UE through the PDU session.

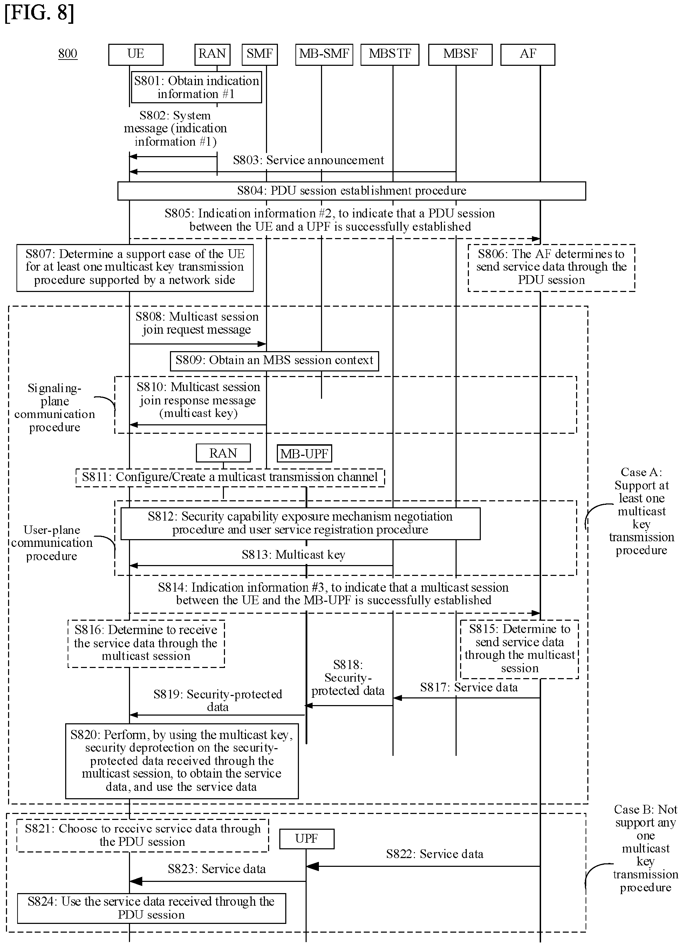

FIG. 8 is a schematic flowchart of a method 800 according to an embodiment of this application. The following describes the method 800 by using an example with reference to steps.

S801: A RAN obtains indication information #1.

For example, the indication information #1 may be configured by OAM on the RAN, or may be sent to the RAN after another network-side network element generates the indication information #1. For example, after determining the indication information #1 (for example, S603 in the method 600), an MBSF sends the indication information #1 to the RAN. The RAN supports an MBS.

It should be understood that, for a meaning and a form of the indication information #1, refer to the descriptions of S603 in the method 600. Details are not described herein again.

S802: The RAN sends a system message to a UE, where the system message includes the indication information #1. Correspondingly, the UE receives the system message from the RAN.

For example, the RAN may include the indication information #1 in the system message and send the system message to the UE. After receiving the system message, the UE obtains the indication information #1 from the system message.

For example, the indication information #1 may be used as a part of an existing information element in the system information. A format of the system information is as follows: The system message includes a master information block (master information block, MIB), a system information block 1 (system information block 1, SIB 1), and system information (system information, SI). The MIB includes a limited quantity of most important and most commonly used transmission parameters. The SIB 1 includes scheduling information of another SIB and information related to access of another cell. The SI carries scheduling information of a SIB. The SI further includes a SIB 2, a SIB 3, a SIB 4, and a SIB 5. The SIB 2 includes cell radio configuration information, the SIB 3 includes cell reselection information, the SIB 4 includes an intra-frequency neighboring cell list and a blocklist, and the SIB 5 includes an inter-frequency neighboring cell list.

Optionally, in S803, the MBSF sends a service announcement to the UE. Correspondingly, the UE receives the service announcement from the MBSF. For a specific process, refer to S307 in the method 300. Details are not described herein again.

S804: The UE performs a PDU session establishment procedure through a network side.

Optionally, in S805, the UE sends indication information #2 to an AF, where the indication information #2 indicates that a PDU session between the UE and a UPF is successfully established. Correspondingly, the AF receives the indication information #2 from the UE.

Optionally, in S806, the AF determines to send service data through the PDU session.

S804 to S806 are similar to S607 to S609 in the method 600, and details are not described herein again.

S807: The UE determines a support case of the UE for at least one multicast key transmission procedure supported by the network side.

When the UE supports any of the at least one multicast key transmission procedure, the UE performs a procedure corresponding to Case A in FIG. 8. When the UE does not support all of the at least one multicast key transmission procedure, the UE performs a procedure corresponding to Case B in FIG. 8. The following separately describes Case A and Case B by using examples.

For S807 and the procedures corresponding to Case A and Case B, refer to S610 to S627 in the method 600. Details are not described herein again.

Based on the foregoing methods 600 to 800, in one aspect, the UE may obtain the service data from the core network based on the support case of the UE for the at least one multicast key transmission procedure. This avoids a case in which the UE cannot obtain the service data (or cannot perform security deprotection on the security-protected service data with the multicast key) because the UE cannot obtain the multicast key distributed by the network side, and can improve user experience. In another aspect, in the solutions provided in embodiments of this application, the UE autonomously determines the support case of the UE for the at least one multicast key transmission procedure supported by the network side, so that the network side does not need to determine or decide a specific multicast key transmission procedure to be used to distribute the multicast key to the UE, to reduce overheads of the network side.

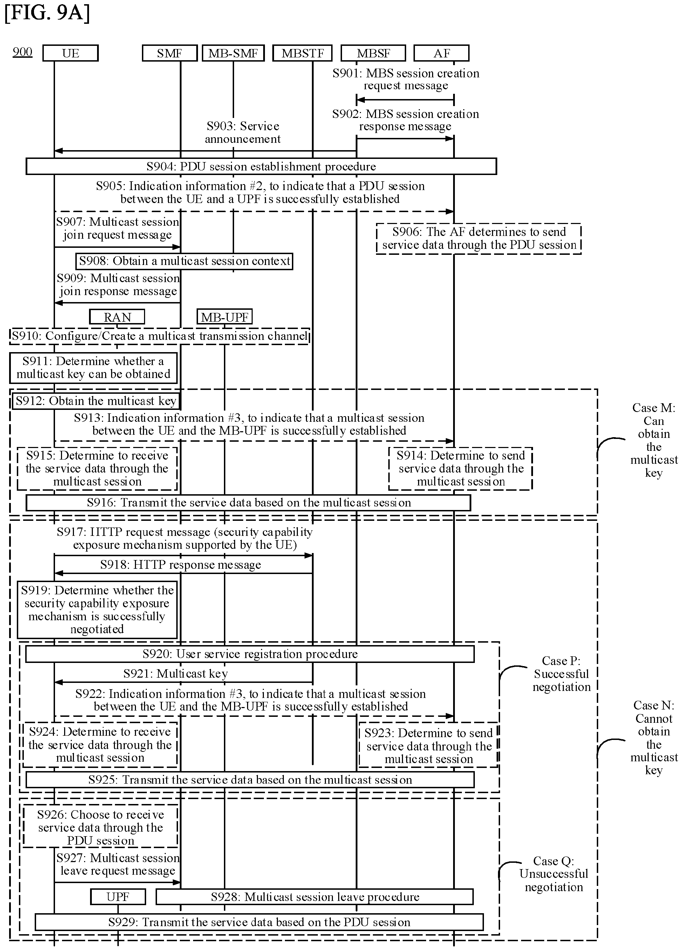

FIG. 9A is a schematic flowchart of a method 900 according to an embodiment of this application. The following describes the method 900 by using an example with reference to steps.

It should be understood that S901 to S904 are similar to S301, S306, S307, and S308 in the method 300, S905 and S906 are similar to S608 and S609 in the method 600, and S907 to S910 are similar to S309 to S312 in the method 300. For brevity, the foregoing steps are not described again.

S911: A UE determines whether a multicast key can be obtained.

For example, after receiving a multicast session join response message from an SMF, the UE determines whether the multicast key can be obtained from the multicast session join response message.

When the multicast session join response message carries the multicast key (that is, a network side supports a signaling-plane communication procedure), and the UE supports the signaling-plane communication procedure, the UE may obtain the multicast key from the multicast session join response message. In this case, the UE performs a procedure corresponding to Case M in FIG. 9A. When the multicast session join response message does not carry the multicast key (that is, a network side does not support a signaling-plane communication procedure) or the UE does not support the signaling-plane communication procedure, the UE cannot obtain the multicast key from the multicast session join response message. In this case, the UE performs a procedure corresponding to Case N in FIG. 9A. The following separately describes Case M and Case N by using examples.

### Case M:

S912: The UE obtains the multicast key. Specifically, the UE obtains the multicast key from a multicast session response message.

Optionally, in S913, the UE sends indication information #3 to an AF, where the indication information #3 indicates that a multicast session between the UE and an MB-UPF is successfully established.

Optionally, in S914, the AF determines to send service data through the multicast session.

Optionally, in S915, the UE determines to receive the service data through the multicast session.

S916: Transmit the service data between the UE and the AF based on the multicast session.

It should be understood that S913 to S915 are similar to S617 to S619 in the method 600, and S916 may correspond to S620 to S623 in the method 600. For brevity, details are not described herein again.

### Case N:

In an implementation, after determining that the multicast key cannot be obtained from the multicast session join response message in S909, the UE initiates a security capability exposure mechanism negotiation procedure, and then obtains the service data based on a security capability exposure mechanism negotiation result. The following provides an example for description with reference to S917 to S929.

S917: The UE sends an HTTP request message to an MBSTF, where the HTTP request message carries information indicating a security exposure mechanism supported by the UE, and the HTTP request message is used for security capability exposure mechanism negotiation. For S917, refer to S401 in the method 400. Details are not described herein again.

S918: The MBSTF sends an HTTP response message to the UE. For S918, refer to S402 in the method 400. Details are not described herein again.

S919: The UE determines whether the security capability exposure mechanism is successfully negotiated.

For example, the UE receives the HTTP response message from the MBSTF. If the HTTP response message carries indication information indicating a negotiation failure, the UE determines that the security capability exposure mechanism negotiation fails. If the HTTP response message does not carry indication information indicating a negotiation failure, and the UE successfully checks an FQDN, the UE determines that the security capability exposure mechanism negotiation succeeds.

Optionally, when the UE fails to establish a security channel with the MBSTF, the MBSTF may send a notification message to some other core network elements, where the notification message carries a UE identifier (user ID) and a cause value. The core network element may be any one of an NWDAF, an MBSF, a PCF, an SMF, and a UPF. The UE identifier may be a SUPI, a GPSI, or the like. The cause value may be that the UE does not match a network multicast security capability or the UE fails to establish multicast security, or the like. It should be understood that the notification message may be used for session management/charging management/policy management and the like. For example, when the core network element is an NWDAF, after receiving the notification message, the NWDAF records a failure cause, to provide a reference for subsequently upgrading a network device.

When the negotiation succeeds, the UE performs a procedure corresponding to Case P in FIG. 9A. When the negotiation fails, the UE performs a procedure corresponding to Case Q in FIG. 9A. The following separately describes Case P and Case Q by using examples.

### Case p:

S920: The UE initiates a user service registration procedure. For a specific process, refer to S405 to S408 in the method 400. Details are not described herein again.

S921: The MBSTF sends the multicast key to the UE.

S922: The UE sends indication information #3 to the AF, where the indication information #3 indicates that a multicast session between the UE and an MB-UPF is successfully established.

Optionally, in S923, the AF determines to send service data through the multicast session.

Optionally, in S924, the UE determines to receive the service data through the multicast session.

S925: Transmit the service data between the UE and the AF based on the multicast session.

It should be understood that S921 to S924 are similar to S616 to S619 in the method 600, and S925 may correspond to S620 to S623 in the method 600. For brevity, details are not described herein again.

### Case Q:

Optionally, in S926, the UE chooses to receive service data through a PDU session. A specific process is similar to S624 in the method 600, and details are not described herein again.

S927: The UE sends a multicast session leave request message to the SMF, where the multicast session leave request message is used to request to leave the multicast session that the UE has joined. Correspondingly, the SMF receives the multicast session leave request message from the UE. Then, in S928, a multicast session leave procedure is performed. A specific process is not limited in this application.

S929: Transmit the service data between the UE and the AF based on the PDU session.

It should be understood that S929 may correspond to S625 to S627 in the method 600. For brevity, details are not described herein again.

In another implementation, after determining that the multicast key cannot be obtained from the multicast session join response message in S909, the UE attempts to obtain the multicast key by using a user-plane communication procedure. For example, the UE attempts to obtain the multicast key by using a U1 procedure. If the multicast key is successfully obtained, the UE may perform the communication procedure shown in S922 to S925. If the multicast key fails to be obtained, the UE may attempt to obtain the multicast key by using a GBA-based user-plane communication procedure. If the multicast key is successfully obtained, the UE may perform the communication procedure shown in S922 to S925. If the multicast key fails to be obtained, the UE may perform the communication procedure shown in Case Q.

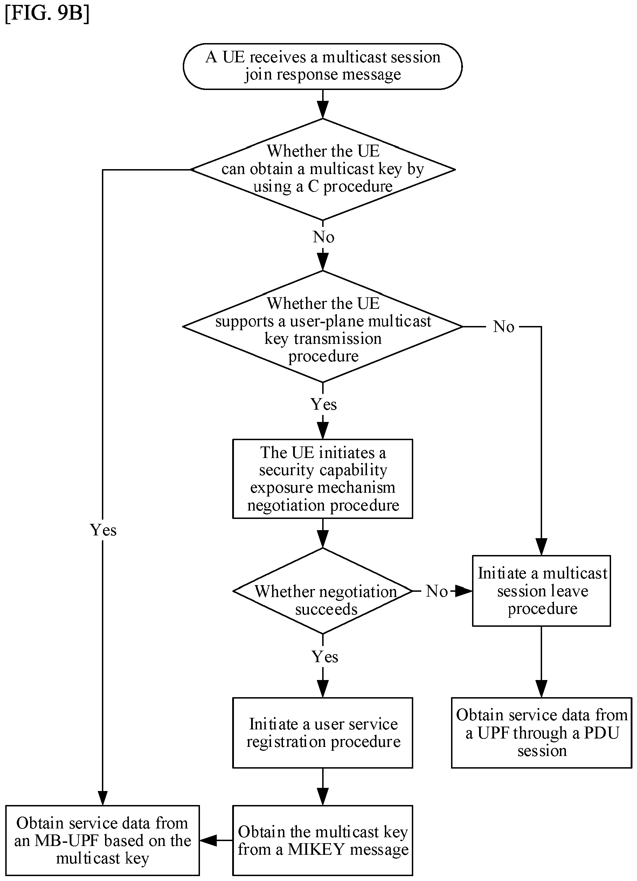

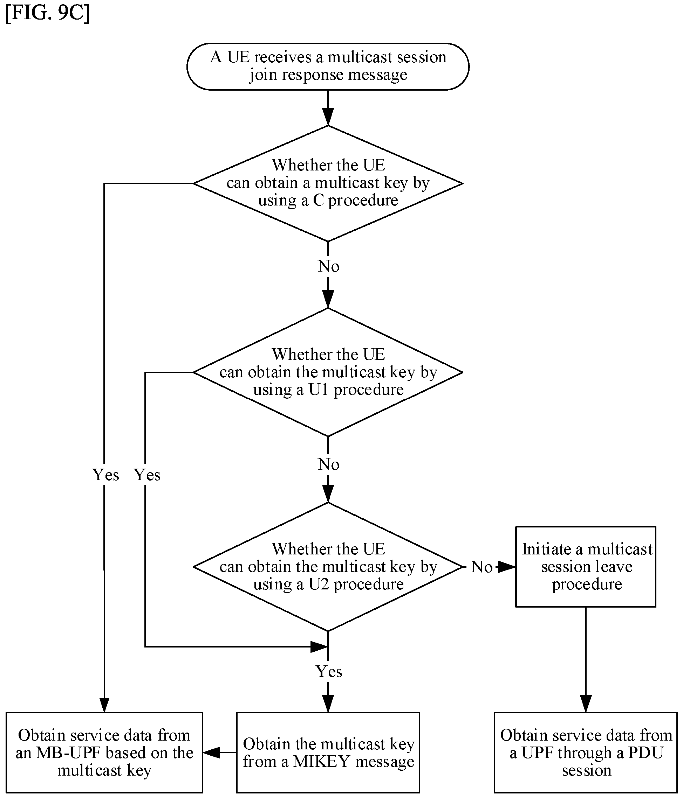

The following describes two logical flowcharts corresponding to the method 900 with reference to FIG. 9B and FIG. 9C.

In a first logical flowchart shown in FIG. 9B, after receiving the multicast session join response message (for example, S909), the UE determines whether the multicast key can be obtained by using the C procedure, that is, determines whether the multicast key can be obtained from the multicast session join response message (for example, S911). If the UE can obtain the multicast key by using the C procedure, the UE obtains the service data (for example, S912 to S916) from the MB-UPF based on the multicast key. If the UE cannot obtain the multicast key by using the C procedure, the UE determines whether the UE supports the user-plane multicast key transmission procedure, that is, the UE determines whether the UE supports the U1 procedure and/or the U2 procedure. When the UE determines that the UE supports the user-plane multicast key transmission procedure (that is, the UE supports the U1 procedure and/or the U2 procedure), the UE initiates the security capability exposure mechanism negotiation procedure (for example, S917 and S918). Then, the UE determines whether the security capability exposure mechanism negotiation succeeds (for example, S919). When determining that the negotiation succeeds, the UE initiates the user service registration procedure (for example, S920). If the security capability exposure mechanism determined by the UE and the network side through negotiation is the AKMA mechanism, the UE obtains the multicast key by using the U1 procedure (for example, S921). If the security capability exposure mechanism determined by the UE and the network side through negotiation is the GBA mechanism, the UE obtains the multicast key by using the U2 procedure. Then, the UE obtains the service data from the MB-UPF based on the multicast key (for example, S925). When the UE determines that the UE does not support the user-plane multicast key transmission procedure, or determines that the security capability exposure mechanism negotiation fails, the UE initiates the multicast session leave procedure (for example, S927) to leave the joined multicast session, and then chooses to obtain the service data from the UPF through the PDU session.

In a second logical flowchart shown in FIG. 9C, after receiving the multicast session join response message (for example, S909), the UE determines whether the multicast key can be obtained by using the C procedure, that is, determines whether the multicast key can be obtained from the multicast session join response message (for example, S911). When the UE can obtain the multicast key by using the C procedure, the UE obtains the service data from the MB-UPF based on the multicast key (for example, S912 to S916). When the UE cannot obtain the multicast key by using the C procedure, the UE determines whether the multicast key can be obtained by using the U1 procedure. If the multicast key can be obtained, the UE obtains the service data from the MB-UPF based on the multicast key (for example, S925). If the multicast key cannot be obtained, the UE further determines whether the multicast key can be obtained by using the U2 procedure. If the multicast key can be obtained, the UE obtains the service data from the MB-UPF based on the multicast key (for example, S925). If the multicast key cannot be obtained, the UE initiates the multicast session leave procedure (for example, S927) to leave the joined multicast session, and then chooses to obtain the service data from the UPF through the PDU session.

Based on the foregoing method 900, in one aspect, the UE may obtain the service data from the core network based on a case in which the multicast key is obtained from the network side, to reduce a possibility that the UE cannot obtain the service data (or cannot perform security deprotection on the security-protected service data with the multicast key) because the UE cannot obtain the multicast key distributed by the network side, and improve user experience. In another aspect, in the solution provided in this embodiment of this application, the network side does not need to determine or decide a specific multicast key transmission procedure to be used to distribute the multicast key to the UE, to reduce overheads of the network side.

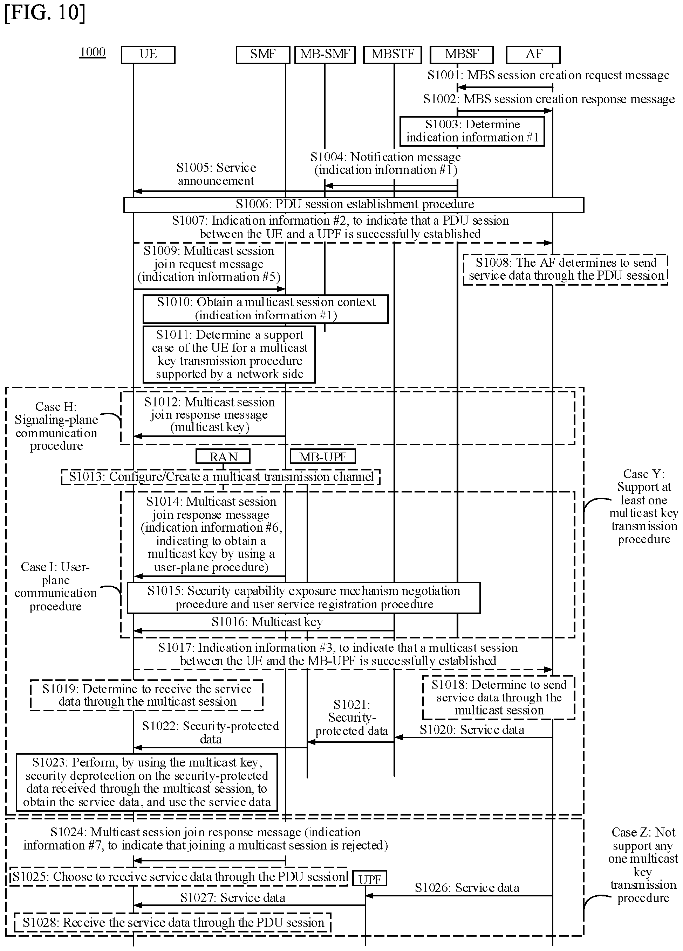

FIG. 10 is a schematic flowchart of a method 1000 according to an embodiment of this application. The following describes the method 1000 by using an example with reference to steps.

S1001: An AF sends an MBS session creation request message to an MBSF. Correspondingly, the MBSF receives the MBS session creation request message from the AF.

S1002: The MBSF sends an MBS session creation response message to the AF. Correspondingly, the AF receives the MBS session creation response message from the MBSF.

It should be understood that S1001 and S1002 are similar to S301 and S306 in the method 300, and steps corresponding to S302 to S305 in the method 300 are omitted in the method 1000. For brevity, details are not described herein again.

S1003: The MBSF determines indication information #1. S1003 is similar to S603 in the method 600, and details are not described herein again.

S1004: The MBSF sends a notification message to an MB-SMF, where the notification message includes the indication information #1. Correspondingly, the MB-SMF receives the notification message from the MBSF, and obtains the indication information #1 from the notification message.

S1005: The MBSF sends a service announcement message to a UE. Correspondingly, the UE receives the service announcement message from the MBSF.

S1006: The UE performs a PDU session establishment procedure through a network side.

Optionally, in S1007, the UE sends indication information #2 to the AF, where the indication information #2 indicates that a PDU session between the UE and a UPF is successfully established. Correspondingly, the AF receives the indication information #2 from the UE.

Optionally, in S1008, the AF determines to send service data through the PDU session.

S1005 to S1008 are similar to S706 to S709 in the method 700, and details are not described herein again.

S1009: The UE sends a multicast session join request message to an SMF, where the multicast session join request message includes indication information #5, and the indication information #5 indicates at least one multicast key transmission procedure supported by the UE.

S1010: The SMF obtains a multicast session context through the MB-SMF, where the multicast session context includes the indication information #1.

S1011: The SMF determines a support case of the UE for a multicast key transmission procedure supported by the network side.

For example, the SMF determines, based on the indication information #1 and the indication information #5, the support case of the UE for the multicast key transmission procedure supported by the network side, or in other words, the SMF determines whether the UE supports at least one of the multicast key transmission procedure supported by the network side, or in other words, the SMF determines whether the multicast key transmission procedure supported by the UE matches the multicast key transmission procedure supported by the network side, or in other words, the SMF determines whether the network side at least one of the multicast key transmission procedure supported by the UE.

When the UE supports one or more of the at least one multicast key transmission procedure supported by the network side, the UE performs a procedure corresponding to Case Y in FIG. 10. When the UE does not support all of the at least one multicast key transmission procedure supported by the network side, the UE performs a procedure corresponding to Case Z in FIG. 10. The following separately describes Case Y and Case Z by using examples.

### Case Y:

S1012: The SMF sends a multicast session join response message to the UE, where the multicast session join response message includes the multicast key. Correspondingly, the UE receives the multicast session join response message from the SMF.

For example, when the UE supports a signaling-plane communication procedure in the multicast key transmission procedure supported by the network side, that is, when both the UE and the network side support the C procedure, the SMF sends, to the UE, the multicast session join response message including the multicast key obtained from the multicast session context, and the UE receives the multicast session join response message, and obtains the multicast key from the multicast session join response message.

S1013 is similar to S614 in the method 600, and details are not described herein again.

S1014: The SMF sends a multicast session join response message to the UE, where the multicast session join response message includes indication information #6. Correspondingly, the UE receives the multicast session join response message from the SMF.

For example, when the UE supports a user-plane communication procedure in the multicast key transmission procedure supported by the network side, that is, when both the UE and the network side support the user-plane communication procedure, the SMF includes the indication information #6 in the multicast session response message, where the indication information #6 indicates the UE to obtain the multicast key by using the user-plane communication procedure.

The UE initiates a security capability exposure mechanism negotiation procedure and a user service registration procedure in S1015 based on the indication information #6. For a detailed process, refer to the method 400. Details are not described herein again. Then, in S616, the UE receives the multicast key from an MBSTF. For example, the UE obtains the multicast key from a MIKEY message from the MBSTF.

Optionally, in S1017, the UE sends indication information #3 to the AF, where the indication information #3 indicates that a multicast session between the UE and an MB-UPF is successfully established.

Optionally, in S1018, the AF determines to send service data through the multicast session.

Optionally, in S1019, the UE determines to receive the service data through the multicast session.

S1020 to S1023: Transmit the service data between the UE and the AF based on the multicast session.

It should be understood that S1017 to S1023 are similar to S617 to S623 in the method 600. For brevity, details are not described herein again.

### Case Z:

S1024: The SMF sends a multicast session join response message to the UE, where the multicast session join response message includes indication information #6. Correspondingly, the UE receives the multicast session join response message from the SMF.

For example, when the UE does not support all of any multicast key transmission procedure supported by the network side, the SMF includes indication information #7 in the multicast session response message. The indication information #7 is used to reject the UE to join the multicast session, or the indication information #7 indicates that the UE does not support all of the at least one multicast key transmission procedure supported by the network side, or the indication information #7 indicates that the multicast key transmission procedure supported by the UE does not match the multicast key transmission procedure supported by the network side, or the indication information #7 indicates the UE to receive the service data through the PDU session.

For example, the SMF sends the multicast session join response message to the UE through an AMF. Specifically, the following is an example of the message:

| 8 | 7 | 6 | 5 | 4 | 3 | 2 | 1 | |
|---|---|---|---|---|---|---|---|---|
| Extended protocol identifier | | | | | | | | octet 1 |
| Security header type | | | | | | | | octet 2 |
| Message authentication code | | | | | | | | octet 3 |
| | | | | | | | | octet 6 |
| Sequence value | | | | | | | | octet 7 |
| Reject cause value | | | | | | | | octet 8 |
| | | | | | | | | octet n |

Optionally, in another possible implementation, the SMF may alternatively send indication information #8 to the UE after the UE joins the multicast session, where the indication information #8 indicates the UE to leave the joined multicast session, or the indication information #8 indicates that the UE does not support all of the at least one multicast key transmission procedure supported by the network side, or the indication information #8 indicates that the multicast key transmission procedure supported by the UE does not match the multicast key transmission procedure supported by the network side, or the indication information #7 indicates the UE to receive the service data through the PDU session. The UE requests, based on the indication information #8, to leave the multicast session from the SMF.

S1025: The UE chooses to receive the service data through the PDU session.

For example, the UE chooses, based on the indication information #7, to receive the service data through the PDU session, or in other words, the UE chooses, based on the indication information #7, not to receive the service data through the multicast session, or in other words, the UE leaves the joined multicast session based on the indication information #7. In this case, the UE does not send, to the AF, the indication information #3 indicating that the multicast session is successfully established or the service data is transmitted through the multicast session, and receives the service data through the PDU session in a subsequent procedure. In other words, the UE sends the indication information #3 to the AF only when determining that the multicast session join response message does not carry the indication information #7 used to reject the UE to access the multicast session.

Optionally, if the UE does not perform S1007 before step S1025, the UE may send indication information #9 to the AF. The indication information #9 indicates that the UE is to transmit the service data through the PDU session, or indicates the AF to trigger the UPF to transmit the service data to the UE through the PDU session. The AF determines, based on the indication information #9, to send the service data to the UE through the PDU session, to trigger the UPF to send the service data to the UE through the PDU session. For details, refer to steps S1026 and S1027.

Optionally, if the UE does not perform S1007 before step S1025, the UE may alternatively send the indication information #2 (indicating that the PDU session is successfully established) to the AF. The AF may alternatively determine, based on the received indication information (that is, the indication information #2) indicating that the PDU session is successfully established but does not receive the indication information indicating that the multicast session is successfully established, to send the service data to the UE through the PDU session, and further trigger the UPF to send the service data to the UE through the PDU session. For details, refer to steps S1026 and S1027.

S1026 to S1028 are similar to S625 to S627 in the method 600, and details are not described herein again.

Based on the method 1000, when determining that the UE does not support all of the at least one multicast key transmission procedure supported by the network side, the SMF may reject the UE to join the multicast session, or indicate the UE to leave the joined multicast session, so that the UE can subsequently receive the service data through the PDU session. This can avoid a case in which the UE cannot obtain the service data (or cannot perform security deprotection on security-protected service data with the multicast key) because the UE cannot obtain the multicast key distributed by the network side, and improve user experience.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

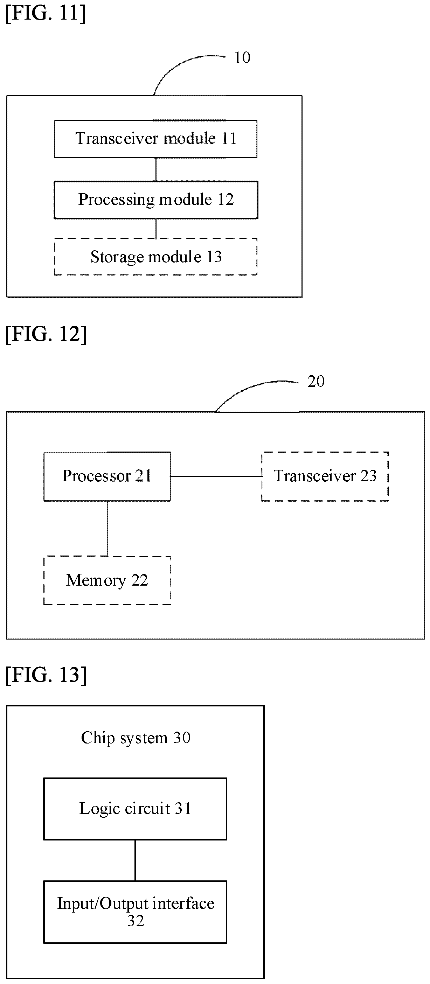

FIG. 11 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform operations related to receiving and sending. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the terminal device (for example, the terminal device in the method 500, 520, or 540, or the UE in the method 600 to the method 1000) in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform operations related to receiving and sending of the terminal device in the foregoing method embodiments (for example, S502 in the method 500). The processing module 12 may be configured to perform processing related operations of the terminal device in the foregoing method embodiments (for example, S503 in the method 500).

In a possible implementation, the transceiver module 11 is configured to obtain first indication information, where the first indication information indicates at least one multicast key transmission procedure, each multicast key transmission procedure is a communication procedure that is supported by a network side and that is used to transmit a multicast key to the terminal device, and the multicast key is a security transmission key of a multicast session between the terminal device and a first content delivery network element. The processing module 12 is configured to obtain service data from a core network based on a support case of the terminal device for the at least one multicast key transmission procedure.

Optionally, the processing module 12 is specifically configured to determine that a target multicast key transmission procedure in the at least one multicast key transmission procedure is supported; obtain the multicast key by using the target multicast key transmission procedure; and obtain the service data from the first content delivery network element based on the multicast key.

Optionally, the processing module 12 is specifically configured to perform, by using the multicast key, security deprotection on security-protected data received from the content delivery network element through the multicast session, to obtain the service data.

Optionally, the target multicast key transmission procedure is a signaling-plane communication procedure between a session management network element and the apparatus. The transceiver module 11 is specifically configured to obtain the multicast key from a multicast session join response message from the session management network element. Alternatively, the target multicast key transmission procedure is an authentication and key management for applications-based user-plane communication procedure between a multicast service network element and the apparatus. The processing module 12 is specifically configured to generate an application key based on an authentication and key management mechanism. The transceiver module 11 is specifically configured to obtain the multicast key from a multimedia internet key management message that is from the multicast service network element. Alternatively, the target multicast key transmission procedure is a generic bootstrapping architecture-based user-plane communication procedure between a multicast service network element and the apparatus. The processing module 12 is specifically configured to generate an application key based on a generic bootstrapping architecture mechanism. The transceiver module 11 is specifically configured to obtain the multicast key from a multimedia internet key management message that is from the multicast service network element.

Optionally, the processing module 12 is specifically configured to determine that all of the at least one multicast key transmission procedure is not supported; and the transceiver module 11 is specifically configured to receive the service data from a second content delivery network element through a unicast session.

Optionally, the second content delivery network element is a user plane function network element.

Optionally, the communication apparatus has joined the multicast session, and the transceiver module 11 is further configured to request to leave the multicast session from the session management network element.

Optionally, the processing module 12 is specifically configured to select, based on the support case of the terminal device for the at least one multicast key transmission procedure, a session used to obtain the service data from the core network.

Optionally, the first content delivery network element is a multicast user plane function network element. The processing module 12 is specifically configured to determine that the target multicast key transmission procedure in the at least one multicast key transmission procedure is supported; and select the multicast session between the apparatus and the first content delivery network element as the session used to obtain the service data.

Optionally, the processing module 12 is specifically configured to determine that the terminal device does not support all of the at least one multicast key transmission procedure; and select the unicast session between the communication apparatus and the second content delivery network element as the session used to obtain the service data.

Optionally, the processing module 12 is specifically configured to obtain the indication information from a first message that is from the multicast service function network element.

Optionally, the first message is a service announcement message.

Optionally, the processing module 12 is specifically configured to obtain the indication information from a second message that is from an access network device.

Optionally, the second message is a system message.

Optionally, the processing module 12 is specifically configured to obtain the indication information from a third message that is from an application function network element.

Optionally, the processing module 12 is specifically configured to obtain the indication information from a fourth message that is from the session management network element.

Optionally, the fourth message is a multicast session join response message.

Optionally, the at least one multicast key transmission procedure includes one or more of the following: a signaling-plane communication procedure between the session management network element and the communication apparatus; an authentication and key management for applications-based user-plane communication procedure between the multicast service network element and the communication apparatus; and a generic bootstrapping architecture-based user-plane communication procedure between the multicast service network element and the communication apparatus.

Optionally, the processing module 12 is further configured to determine that establishment of the unicast session is completed; and the transceiver module 11 is further configured to send second indication information to the application function network element, where the second indication information indicates that the unicast session is successfully established.

Optionally, the processing module 12 is further configured to determine that establishment of the multicast session is completed; and the transceiver module 11 is further configured to send third indication information to the application function network element, where the third indication information indicates that the multicast session is successfully established.

In another possible implementation, the transceiver module 11 is configured to send a request message to the session management network element, where the request message is used to request to join the multicast session between the communication apparatus and the first content delivery network element; and receive third indication information from the session management network element, where the third indication information indicates that the session management function rejects the terminal device to join the multicast session or indicates the terminal device to obtain the service data through the unicast session; and the processing module 12 is configured to determine, based on the third indication information, that establishment of the multicast session fails.

Optionally, the first content delivery network element is a multicast user plane function network element.

In a second design, the apparatus 10 may correspond to the network device (for example, the session management network element in the method 500, the session management network element in the method 520 and the method 540, the SMF or the MBSF in the method 600 and the method 700, the RAN in the method 800, or the SMF in the method 900 and the method 1000) in the foregoing method embodiments, or a component (for example, a chip) of the network device.

The apparatus 10 may implement corresponding steps or procedures performed by the network device in the foregoing method embodiments. The transceiver module 11 may be configured to perform operations related to receiving and sending of the network device in the foregoing method embodiments (for example, S502 in the method 500). The processing module 12 may be configured to perform processing related operations of the network device in the foregoing method embodiments (for example, S501 in the method 500).

In a possible implementation, the processing module 12 is configured to determine first indication information, where the first indication information indicates at least one multicast key transmission procedure, each multicast key transmission procedure is a communication procedure that is supported by a network side and that is used to transmit a multicast key to a terminal device, and the multicast key is a security transmission key of a multicast session between the terminal device and a first content delivery network element; and the transceiver module 11 is configured to send the first indication information to the terminal device.

Optionally, the communication apparatus is a multicast service network element, and the transceiver module 11 is specifically configured to send a first message to the terminal device, where the first message includes the indication information.

Optionally, the first message is a service announcement message.

Optionally, the communication apparatus is an access network device, and the transceiver module 11 is specifically configured to send a second message to the terminal device, where the second message includes the indication information.

Optionally, the second message is a system message.

Optionally, the communication apparatus is an application function network element, and the transceiver module 11 is specifically configured to send a third message to the terminal device, where the third message includes the indication information.

Optionally, the communication apparatus is a session management network element, and the transceiver module 11 is specifically configured to send a fourth message to the terminal device, where the fourth message includes the indication information.

Optionally, the fourth message is a multicast session join response message.

Optionally, the at least one multicast key transmission procedure includes one or more of the following: a signaling-plane communication procedure between the session management network element and the terminal device; an authentication and key management for applications-based user-plane communication procedure between the multicast service network element and the terminal device; and a generic bootstrapping architecture-based user-plane communication procedure between the multicast service network element and the terminal device.

In another possible implementation, the communication apparatus may be the foregoing session management network element or a component of the session management network element. The transceiver module 11 is configured to send a request message to the session management network element, where the request message is used to request to join the multicast session between the terminal device and the first content delivery network element; and receive third indication information from the session management network element, where the third indication information indicates that the session management function rejects the terminal device to join the multicast session or indicates the terminal device to obtain the service data through the unicast session; and the processing module 12 is configured to determine, based on the third indication information, that establishment of the multicast session fails.

With reference to the fourth aspect, in some implementations of the fourth aspect, the processing module 12 is further configured to choose, based on the third indication information, to obtain the service data through a unicast session between the terminal device and a second content delivery network element.

With reference to the fourth aspect, in some implementations of the fourth aspect, the first content delivery network element is a multicast user plane function network element, and the second content delivery network element is a user plane function network element.

With reference to the fourth aspect, in some implementations of the fourth aspect, the transceiver module 11 is specifically configured to receive, from the session management network element, a response message corresponding to the request message, where the response message includes the third indication information.

With reference to the fourth aspect, in some implementations of the fourth aspect, the transceiver module 11 is further configured to send fourth indication information to an application function network element, where the fourth indication information indicates to send the service data to the terminal device through the unicast session.

In still another possible implementation, the communication apparatus may be the foregoing session management network element or a component of the session management network element. The processing module 12 is configured to determine that a multicast key fails to be obtained from a network side, where the multicast key is a security transmission key of a multicast session between the terminal device and a first content delivery network element. The transceiver module 11 is configured to request, from a session management network element, to leave a multicast session that the terminal device has joined.

Optionally, the processing module 12 is specifically configured to determine that the multicast key fails to be obtained from the network side by using a first multicast key transmission procedure, where the first multicast key transmission procedure is a first communication procedure used by the network side to transmit the multicast key to the terminal device.

Optionally, the transceiver module 11 is specifically configured to request to join the multicast session from the session management network element; and receive a response message from the session management network element; and the processing module 12 is specifically configured to determine that the multicast key fails to be obtained from the response message.

Optionally, the processing module 12 is specifically configured to determine that the multicast key fails to be obtained from the network side by using a second multicast key transmission procedure, where the second multicast key transmission procedure is a second communication procedure used by the network side to transmit the multicast key to the terminal device.

Optionally, the transceiver module 11 is specifically configured to initiate a security capability exposure mechanism negotiation procedure to the network side; and the processing module 12 is specifically configured to determine that the security capability exposure mechanism negotiation fails; and determine, based on a result that the security capability exposure mechanism negotiation fails, that the multicast key fails to be obtained from the network side.

Optionally, the second multicast key transmission procedure is an authentication and key management for applications-based user-plane communication procedure between a multicast service network element and the communication apparatus. The processing module 12 is specifically configured to initiate a user service registration procedure to the multicast service network element based on an authentication and key management for applications mechanism; determine that the user service registration procedure fails; and determine, based on a result that the user service registration procedure fails, that the multicast key fails to be obtained from the network side.

Optionally, the processing module 12 is specifically configured to determine that the multicast key fails to be obtained from the network side by using a third multicast key transmission procedure, where the third multicast key transmission procedure is a third communication procedure used by the network side to transmit the multicast key to the terminal device.

Optionally, the processing module 12 is specifically configured to initiate a user service registration procedure to the multicast service network element based on a generic bootstrapping architecture mechanism; determine that the user service registration procedure fails; and determine, based on a result that the user service registration procedure fails, that the multicast key fails to be obtained from the network side.

Optionally, the processing module 12 is further configured to choose to receive the service data from a second content delivery network element through a unicast session.

Optionally, the second content delivery network element is a user plane function network element.

Optionally, the transceiver module 11 is further configured to send fourth indication information to an application function network element, where the fourth indication information indicates to send the service data to the terminal device through the unicast session.

Optionally, the first content delivery network element is a multicast user plane function network element.

It should be understood that a specific process in which the modules perform the foregoing corresponding steps has been described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the terminal device (for example, the terminal device in the method 500, 520, or 540, or the UE in the method 600 to the method 1000) in the foregoing embodiments, and may be configured to perform procedures and/or steps corresponding to the terminal device in the foregoing method embodiments. Alternatively, the apparatus 10 may be specifically the network device (for example, the session management network element in the method 500, the session management network element in the method 520 and the method 540, the SMF or the MBSF in the method 600 and the method 700, the RAN in the method 800, or the SMF in the method 900 and the method 1000) in the foregoing embodiments, and may be configured to perform procedures and/or steps corresponding to the network device in the foregoing method embodiments. To avoid repetition, details are not described herein again.

The apparatus 10 in the foregoing solutions has a function of implementing corresponding steps performed by the device (for example, the network device or the terminal device) in the foregoing methods. The function may be implemented by hardware, or may be implemented by hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 11 may alternatively be a transceiver circuit (for example, the transceiver module may include a receiver circuit and a transmitter circuit), and the processing module may be a processing circuit.

FIG. 12 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 12, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 12, the apparatus 20 further includes a transceiver 23, and the transceiver 23 is configured to receive and/or send a signal. For example, the processor 21 is configured to control the transceiver 23 to receive and/or send the signal.

In a solution, the communication apparatus 20 is configured to implement operations performed by the mobility management network element in the foregoing method embodiments.

For example, the processor 21 is configured to execute the computer program or the instructions stored in the memory 22, to implement related operations of the terminal device (for example, the terminal device in the method 500, 520, or 540, or the UE in the method 600 to the method 1000) in the foregoing method embodiments. For example, the processor 21 executes the computer program or the instructions stored in the memory 22, to implement the method performed by the terminal device in the method 500, the method 520, and the method 540, or to indicate the method performed by the UE in the method 600 to the method.

In another solution, the apparatus 20 is configured to implement operations performed by the network device (for example, the session management network element in the method 500, the session management network element in the method 520 and the method 540, the SMF or the MBSF in the method 600 and the method 700, the RAN in the method 800, or the SMF in the method 900 and the method 1000) in the foregoing method embodiments.

For example, the processor 21 is configured to execute the computer program or instructions stored in the memory 22, to implement related operations performed by the network device in the foregoing method embodiments. For example, the processor 21 executes the computer program or instructions stored in the memory 22, to implement the method performed by the network device in the method 500, or may implement the method performed by the session management network element in the method 520 and the method 540.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) may be integrated into the processor.

It should be further noted that the memory described in this specification is intended to include but is not limited to these memories and any memory of another proper type.

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In another solution, the chip system 30 is configured to implement operations performed by the network device (for example, the session management network element in the method 500, the session management network element in the method 520 and the method 540, the SMF or the MBSF in the method 600 and the method 700, the RAN in the method 800, or the SMF in the method 900 and the method 1000) in the foregoing method embodiments.

In another solution, the chip system 30 is configured to implement operations performed by the terminal device (for example, the terminal device in the method 500, 520, or 540, or the UE in the method 600 to the method 1000) in the foregoing method embodiments.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the methods performed by the mobility management network element in the foregoing method embodiments.

For another example, when a computer program is executed by a computer, the computer is enabled to implement the methods performed by the terminal device in the foregoing method embodiments.

An embodiment of this application further provides a computer program product, including instructions. When the instructions are executed by a computer, the methods performed by a device (for example, the mobility management network element or the terminal device) in the foregoing method embodiments are implemented.

An embodiment of this application further provides a communication system, including the foregoing mobility management network element and session management network element. Optionally, the system further includes a device that communicates with the foregoing remote terminal device and/or relay terminal device.

For explanations and beneficial effects of related content in any apparatus provided above, refer to the corresponding method embodiment described above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a terminal device, first indication information, wherein the first indication information indicates at least one multicast key transmission procedure, each multicast key transmission procedure is a communication procedure that is supported by a network side and that is used to transmit a multicast key to the terminal device, and the multicast key is a security transmission key of a multicast session between the terminal device and a first content delivery network element; and
obtaining, by the terminal device, service data from a core network based on a support case of the terminal device for the at least one multicast key transmission procedure.

2. The method according to claim 1, wherein the obtaining, by the terminal device, service data from a core network based on a support case of the terminal device for the at least one multicast key transmission procedure comprises:
determining, by the terminal device, that the terminal device supports a target multicast key transmission procedure in the at least one multicast key transmission procedure;
obtaining, by the terminal device, the multicast key by using the target multicast key transmission procedure; and
obtaining, by the terminal device, the service data from the first content delivery network element based on the multicast key.

3. The method according to claim 2, wherein the obtaining, by the terminal device, the service data from the first content delivery network element based on the multicast key comprises:
performing, by the terminal device by using the multicast key, security deprotection on security-protected data received from the first content delivery network element through the multicast session, to obtain the service data.

4. The method according to claim 1, wherein the obtaining, by the terminal device, service data from the network side based on a support case of the terminal device for the at least one multicast key transmission procedure comprises:
determining, by the terminal device, that the terminal device does not support all of the at least one multicast key transmission procedure; and
receiving, by the terminal device, the service data from a second content delivery network element through a unicast session.

5. The method according to claim 4, wherein the terminal device has joined the multicast session, and the method further comprises:
requesting, by the terminal device from a session management network element, to leave the multicast session.

6. The method according to any one of claims 1 to 5, wherein the obtaining, by a terminal device, first indication information comprises:
obtaining, by the terminal device, the first indication information from a first message that is from a multicast service function network element.

7. The method according to claim 6, wherein the first message is a service announcement message.

8. The method according to any one of claims 1 to 7, wherein the obtaining, by a terminal device, first indication information comprises:
obtaining, by the terminal device, the first indication information from a second message that is from an access network device.

9. The method according to claim 8, wherein the second message is a system message.

10. The method according to any one of claims 1 to 5, wherein the obtaining, by a terminal device, first indication information comprises:
obtaining, by the terminal device, the first indication information from a third message that is from an application function network element.

11. The method according to any one of claims 1 to 5, wherein the obtaining, by a terminal device, first indication information comprises:
obtaining, by the terminal device, the first indication information from a fourth message that is from the session management network element.

12. The method according to claim 11, wherein the fourth message is a multicast session join response message.

13. The method according to any one of claims 1 to 12, wherein the at least one multicast key transmission procedure comprises one or more of the following:
a signaling-plane communication procedure between the session management network element and the terminal device;
an authentication and key management for applications-based user-plane communication procedure between the multicast service network element and the terminal device; and
a generic bootstrapping architecture-based user-plane communication procedure between the multicast service network element and the terminal device.

14. The method according to claim 4 or 5, wherein the unicast session is a data connection session between the terminal device and a user plane function network element, and the method further comprises:
determining, by the terminal device, that establishment of the unicast session is completed; and
sending, by the terminal device, second indication information to an application function network element, wherein the second indication information indicates that the unicast session is successfully established.

15. The method according to claim 2 or 3, wherein the method further comprises: determining, by the terminal device, that establishment of the multicast session is completed; and
sending, by the terminal device, third indication information to an application function network element, wherein the third indication information indicates that the multicast session is successfully established.

16. A communication method, comprising:
determining, by a network device, first indication information, wherein the first indication information indicates at least one multicast key transmission procedure, each multicast key transmission procedure is a communication procedure that is supported by a network side and that is used to transmit a multicast key to a terminal device, and the multicast key is a security transmission key of a multicast session between the terminal device and a first content delivery network element; and sending, by the network device, the first indication information to the terminal device.

17. The method according to claim 16, wherein the network device is a multicast service function network element, and the sending, by the network device, the first indication information to the terminal device comprises:
sending, by the multicast service function network element, a first message to the terminal device, wherein the first message comprises the first indication information.

18. The method according to claim 17, wherein the first message is a service announcement message.

19. The method according to claim 16, wherein the network device is an access network device, and the sending, by the network device, the first indication information to the terminal device comprises:
sending, by the access network device, a second message to the terminal device, wherein the second message comprises the first indication information.

20. The method according to claim 19, wherein the second message is a system message.

21. The method according to claim 16, wherein the network device is an application function network element, and the sending, by the network device, the first indication information to the terminal device comprises:
sending, by the application function network element, a third message to the terminal device, wherein the third message comprises the first indication information.

22. The method according to claim 16, wherein the network device is a session management network element, and the sending, by the network device, the first indication information to the terminal device comprises:
sending, by the session management network element, a fourth message to the terminal device, wherein the fourth message comprises the first indication information.

23. The method according to claim 22, wherein the fourth message is a multicast session join response message.

24. The method according to any one of claims 16 to 23, wherein the at least one multicast key transmission procedure comprises one or more of the following:
a signaling-plane communication procedure between the session management network element and the terminal device;
an authentication and key management for applications-based user-plane communication procedure between the multicast service network element and the terminal device; and
a generic bootstrapping architecture-based user-plane communication procedure between the multicast service network element and the terminal device.

25. A communication method, comprising:
determining, by a network device, first indication information, and sending the first indication information to a terminal device, wherein the first indication information indicates at least one multicast key transmission procedure, each multicast key transmission procedure is a communication procedure that is supported by a network side and that is used to transmit a multicast key to the terminal device, and the multicast key is a security transmission key of a multicast session between the terminal device and a first content delivery network element;
obtaining, by the terminal device, the first indication information; and
obtaining, by the terminal device, service data from a core network based on a support case of the terminal device for the at least one multicast key transmission procedure.

26. The method according to claim 25, wherein the obtaining, by the terminal device, service data from a core network based on a support case of the terminal device for the at least one multicast key transmission procedure comprises:
determining, by the terminal device, that the terminal device supports a target multicast key transmission procedure in the at least one multicast key transmission procedure;
obtaining, by the terminal device, the multicast key by using the target multicast key transmission procedure; and
obtaining, by the terminal device, the service data from the first content delivery network element based on the multicast key.

27. The method according to claim 26, wherein the obtaining, by the terminal device, the service data from the first content delivery network element based on the multicast key comprises:
performing, by the terminal device by using the multicast key, security deprotection on security-protected data received from the first content delivery network element through the multicast session, to obtain the service data.

28. The method according to claim 25, wherein the obtaining, by the terminal device, service data from the network side based on a support case of the terminal device for the at least one multicast key transmission procedure comprises:
determining, by the terminal device, that the terminal device does not support all of the at least one multicast key transmission procedure; and
receiving, by the terminal device, the service data from a second content delivery network element through a unicast session.

29. The method according to claim 28, wherein the terminal device has joined the multicast session, and the method further comprises:
requesting, by the terminal device from a session management network element, to leave the multicast session.

30. The method according to any one of claims 25 to 29, wherein the network device is a multicast service function network element, and the sending, by a network device, the first indication information to a terminal device comprises:
sending, by the multicast service function network element, a first message to the terminal device, wherein the first message comprises the first indication information; and
the obtaining, by the terminal device, the indication information comprises:
obtaining, by the terminal device, the first indication information from the first message that is from the multicast service function network element.

31. The method according to claim 30, wherein the first message is a service announcement message.

32. The method according to any one of claims 25 to 29, wherein the network device is an access network device, and the sending, by a network device, the indication information to a terminal device comprises:
sending, by the access network device, a second message to the terminal device, wherein the second message comprises the first indication information; and
the obtaining, by the terminal device, the first indication information comprises: obtaining, by the terminal device, the first indication information from the second message that is from the access network device.

33. The method according to claim 32, wherein the second message is a system message.

34. The method according to any one of claims 25 to 29, wherein the network device is an application function network element, and the sending, by a network device, the first indication information to a terminal device comprises:
sending, by the application function network element, a third message to the terminal device, wherein the third message comprises the first indication information; and
the obtaining, by the terminal device, the first indication information comprises: obtaining, by the terminal device, the first indication information from the third message that is from the application function network element.

35. The method according to any one of claims 25 to 29, wherein the network device is a session management network element, and the sending, by a network device, the first indication information to a terminal device comprises:
sending, by the session management network element, a fourth message to the terminal device, wherein the fourth message comprises the first indication information; and
the obtaining, by the terminal device, the first indication information comprises: obtaining, by the terminal device, the first indication information from the fourth message that is from the session management network element.

36. The method according to claim 35, wherein the fourth message is a multicast session join response message.

37. The method according to any one of claims 25 to 36, wherein the at least one multicast key transmission procedure comprises one or more of the following:
a signaling-plane communication procedure between the session management network element and the terminal device;
an authentication and key management for applications-based user-plane communication procedure between the multicast service network element and the terminal device; and
a generic bootstrapping architecture-based user-plane communication procedure between the multicast service network element and the terminal device.

38. The method according to claim 28 or 29, wherein the unicast session is a data connection session between the terminal device and a user plane function network element, and the method further comprises:
determining, by the terminal device, that establishment of the unicast session is completed; and
sending, by the terminal device, second indication information to an application function network element, wherein the second indication information indicates that the unicast session is successfully established.

39. The method according to claim 26 or 27, wherein the method further comprises:
determining, by the terminal device, that establishment of the multicast session is completed; and
sending, by the terminal device, third indication information to an application function network element, wherein the third indication information indicates that the multicast session is successfully established.

40. A communication apparatus, wherein the apparatus comprises a module configured to perform the method according to any one of claims 1 to 15, or a module configured to perform the method according to any one of claims 16 to 24.

41. A communication apparatus, comprising:
a processor, configured to execute a computer program stored in a memory, so that the apparatus performs the method according to any one of claims 1 to 15, or the apparatus performs the method according to any one of claims 16 to 24.

42. A computer program product, wherein the computer program product comprises instructions used to perform the method according to any one of claims 1 to 15, or the computer program product comprises instructions used to perform the method according to any one of claims 16 to 24.

43. A computer-readable storage medium, wherein the computer-readable storage medium stores a computer program; and when the computer program is run on a computer, the computer is enabled to perform the method according to any one of claims 1 to 15, or the computer is enabled to perform the method according to any one of claims 16 to 24.

44. A communication system, comprising a terminal device and a network device, wherein
the terminal device is configured to perform the method according to any one of claims 1 to 15, and the network device is configured to perform the method according to any one of claims 16 to 24.

## Amended claims

### Amended claims under Art. 19.1 PCT

1. A communication method, comprising:
obtaining first indication information, wherein the first indication information indicates a multicast key transmission procedure, the multicast key transmission procedure is a communication procedure that is supported by a network side and that is used to transmit a multicast key to a communication apparatus, and the multicast key is a security transmission key of a multicast session between the communication apparatus and a first content delivery network element; and
obtaining service data from a core network based on a support case of the communication apparatus for the multicast key transmission procedure.

2. The method according to claim 1, wherein the obtaining service data from a core network based on a support case of the communication apparatus for the multicast key transmission procedure comprises:
determining that the communication apparatus supports the multicast key transmission procedure;
obtaining the multicast key by using the multicast key transmission procedure; and obtaining the service data from the first content delivery network element based on the multicast key.

3. The method according to claim 2, wherein the obtaining the service data from the first content delivery network element based on the multicast key comprises:
performing, by using the multicast key, security deprotection on security-protected data received from the first content delivery network element through the multicast session, to obtain the service data.

4. The method according to claim 1, wherein the obtaining service data from the network side based on a support case of the communication apparatus for the multicast key transmission procedure comprises:
determining that the communication apparatus does not support the multicast key transmission procedure; and
receiving the service data from a second content delivery network element through a unicast session.

5. The method according to claim 4, wherein the communication apparatus has joined the multicast session, and the method further comprises:
requesting a session management network element to enable the communication apparatus to leave the multicast session.

6. The method according to any one of claims 1 to 5, wherein the obtaining first indication information comprises:
obtaining the first indication information from a first message that is from a multicast service function network element.

7. The method according to claim 6, wherein the first message is a service announcement message.

8. The method according to any one of claims 1 to 7, wherein the obtaining first indication information comprises:
obtaining the first indication information from a second message that is from an access network device.

9. The method according to claim 8, wherein the second message is a system message.

10. The method according to any one of claims 1 to 5, wherein the obtaining first indication information comprises:
obtaining the first indication information from a third message that is from an application function network element.

11. The method according to any one of claims 1 to 5, wherein the obtaining first indication information comprises:
obtaining the first indication information from a fourth message that is from the session management network element.

12. The method according to claim 11, wherein the fourth message is a multicast session join response message.

13. The method according to any one of claims 1 to 12, wherein the multicast key transmission procedure is any one of the following:
a signaling-plane communication procedure between the session management network element and the communication apparatus;
an authentication and key management for applications AKMA-based user-plane communication procedure between the multicast service network element and the communication apparatus; or
a generic bootstrapping architecture GBA-based user-plane communication procedure between the multicast service network element and the communication apparatus.

14. The method according to any one of claims 1 to 12, wherein
the first indication information comprises first information, the first information indicates that the network side supports transmitting the multicast key through a first communication procedure, the first communication procedure is a signaling-plane communication procedure between the session management network element and the communication apparatus; or
the first indication information comprises first information and second information, the first information indicates that the network side supports transmitting the multicast key through a second communication procedure, the second communication procedure is a user-plane communication procedure between the multicast service network element and the communication apparatus, and the second information indicates that the second communication procedure is an authentication and key management for applications AKMA-based user-plane communication procedure or a generic bootstrapping architecture GBA-based user-plane communication procedure.

15. The method according to claim 4 or 5, wherein the unicast session is a data connection session between the terminal and a user plane function network element, and the method further comprises:
determining that establishment of the unicast session is completed; and
sending second indication information to an application function network element, wherein the second indication information indicates that the unicast session is successfully established.

16. The method according to claim 2 or 3, wherein the method further comprises:
determining that establishment of the multicast session is completed; and
sending third indication information to an application function network element,
wherein the third indication information indicates that the multicast session is successfully established.

17. A communication method, comprising:
determining first indication information, wherein the first indication information indicates a multicast key transmission procedure, the multicast key transmission procedure is a communication procedure that is supported by a network side and that is used to transmit a multicast key to a communication apparatus, and the multicast key is a security transmission key of a multicast session between the communication apparatus and a first content delivery network element; and
sending the first indication information to the communication apparatus.

18. The method according to claim 17, wherein the sending the first indication information to the communication apparatus comprises:
sending, by a multicast service network element, a first message to the communication apparatus, wherein the first message comprises the first indication information.

19. The method according to claim 18, wherein the first message is a service announcement message.

20. The method according to claim 17, wherein the sending the first indication information to the communication apparatus comprises:
sending, by an access network device, a second message to the communication apparatus, wherein the second message comprises the first indication information.

21. The method according to claim 20, wherein the second message is a system message.

22. The method according to claim 17, wherein the sending the first indication information to the communication apparatus comprises:
sending, by an application function network element, a third message to the communication apparatus, wherein the third message comprises the first indication information.

23. The method according to claim 17, wherein the sending the first indication information to the communication apparatus comprises:
sending, by a session management network element, a fourth message to the communication apparatus, wherein the fourth message comprises the first indication information.

24. The method according to claim 23, wherein the fourth message is a multicast session join response message.

25. The method according to any one of claims 17 to 24, wherein the multicast key transmission procedure is any one of the following:
a signaling-plane communication procedure between the session management network element and the communication apparatus;
an authentication and key management for applications AKMA-based user-plane communication procedure between the multicast service network element and the communication apparatus; or
a generic bootstrapping architecture GBA-based user-plane communication procedure between the multicast service network element and the communication apparatus.

26. The method according to any one of claims 17 to 24, wherein
the first indication information comprises first information, the first information indicates that the network side supports transmitting the multicast key through a first communication procedure, the first communication procedure is a signaling-plane communication procedure between the session management network element and the communication apparatus; or
the first indication information comprises first information and second information, the first information indicates that the network side supports transmitting the multicast key through a second communication procedure, the second communication procedure is a user-plane communication procedure between the multicast service network element and the communication apparatus, and the second information indicates that the second communication procedure is an authentication and key management for applications AKMA-based user-plane communication procedure or a generic bootstrapping architecture GBA-based user-plane communication procedure.

27. A communication method, comprising:
determining first indication information, wherein the first indication information indicates a multicast key transmission procedure, the multicast key transmission procedure is a communication procedure that is supported by a network side and that is used to transmit a multicast key to a communication apparatus, and the multicast key is a security transmission key of a multicast session between the communication apparatus and a first content delivery network element;
sending the first indication information to the communication apparatus;
obtaining the first indication information; and
obtaining service data from a core network based on a support case of the communication apparatus for the multicast key transmission procedure.

28. The method according to claim 27, wherein the obtaining service data from a core network based on a support case of the communication apparatus for the multicast key transmission procedure comprises:
determining that the communication apparatus supports the multicast key transmission procedure;
obtaining the multicast key by using the multicast key transmission procedure; and obtaining the service data from the first content delivery network element based on the multicast key.

29. The method according to claim 27, wherein the obtaining service data from the network side based on a support case of the communication apparatus for the multicast key transmission procedure comprises:
determining that the communication apparatus does not support the multicast key transmission procedure; and
receiving the service data from a second content delivery network element through a unicast session.

30. The method according to any one of claims 27 to 29, wherein the sending the first indication information to the communication apparatus comprises:
sending, by a multicast service function network element, a first message to the communication apparatus, wherein the first message comprises the first indication information; and
the obtaining the indication information comprises:
obtaining, by the communication apparatus, the first indication information from the first message that is from the multicast service function network element.

31. The method according to claim 30, wherein the first message is a service announcement message.

32. The method according to any one of claims 27 to 31, wherein the multicast key transmission procedure is any one of the following:
a signaling-plane communication procedure between a session management network element and the communication apparatus;
an authentication and key management for applications AKMA-based user-plane communication procedure between the multicast service network element and the communication apparatus; or
a generic bootstrapping architecture GBA-based user-plane communication procedure between the multicast service network element and the communication apparatus.

33. The method according to any one of claims 27 to 31, wherein
the first indication information comprises first information, the first information indicates that the network side supports transmitting the multicast key through a first communication procedure, the first communication procedure is a signaling-plane communication procedure between a session management network element and the communication apparatus; or
the first indication information comprises first information and second information, the first information indicates that the network side supports transmitting the multicast key through a second communication procedure, the second communication procedure is a user-plane communication procedure between the multicast service network element and the communication apparatus, and the second information indicates that the second communication procedure is an authentication and key management for applications AKMA-based user-plane communication procedure or a generic bootstrapping architecture GBA-based user-plane communication procedure.

34. A communication apparatus, comprising a module configured to perform the method according to any one of claims 1 to 16, or a module configured to perform the method according to any one of claims 17 to 26.

35. A communication apparatus, comprising:
a processor, configured to execute a computer program stored in a memory, so that the apparatus performs the method according to any one of claims 1 to 16, or the apparatus performs the method according to any one of claims 17 to 26.

36. A computer program product, wherein the computer program product comprises instructions used to perform the method according to any one of claims 1 to 16, or the computer program product comprises instructions used to perform the method according to any one of claims 17 to 26.

37. A computer-readable storage medium, wherein the computer-readable storage medium stores a computer program; and when the computer program is run on a computer, the computer is enabled to perform the method according to any one of claims 1 to 16, or the computer is enabled to perform the method according to any one of claims 17 to 26.

38. A communication system, comprising a communication apparatus and a network device, wherein
the communication apparatus is configured to perform the method according to any one of claims 1 to 16, and the network device is configured to perform the method according to any one of claims 17 to 26.
